# EUROPEAN PATENT APPLICATION

(11) **EP 4 792 955 A1**
(43) Date of publication of application: **19.08.2026**
(21) Application number: 25158625.1
(22) Date of filing: 18.02.2025
(51) Int. Cl.: B22F 1/107, B33Y 70/10, B22F 10/10, C09D 11/00, B33Y 80/00, C04B 35/00, C09D 11/037, B41M 1/12

(54) **MEANS FOR THREE-DIMENSIONAL SCREEN PRINTING**

(71) Applicant: Ventix Printing Solution GmbH, 8832 Wollerau (CH)
(72) Inventor: Deck, David, 8832 Wollerau (CH)
(74) Representative: Engelhard, Markus

(57) **Abstract**

The present invention relates to a use of a composition for three-dimensional screen printing. The present invention further relates to a composition for three-dimensional screen printing of a three-dimensional body. The present invention also relates to a method of three-dimensional screen printing a three-dimensional body.

## Description

### FIELD OF THE INVENTION

The present invention relates to a use of a composition for three-dimensional screen printing. The present invention further relates to a composition for three-dimensional screen printing of a three-dimensional body. The present invention also relates to a method of three-dimensional screen printing a three-dimensional body.

### BACKGROUND OF THE INVENTION

Three-dimensional (3D) printing, also known as additive manufacturing, has revolutionized the manufacturing industry by enabling the creation of complex structures with high precision and minimal waste. Among the various 3D printing technologies, screen printing has emerged as a versatile technique due to its ability to deposit materials in a controlled manner. Traditionally used for two-dimensional applications, screen printing has been adapted for three-dimensional processes, allowing for the fabrication of intricate geometries and multi-material components.

Screen printing involves the use of a screen, particularly a mesh screen, to transfer a composition such as a paste onto a substrate, except in areas made impermeable to the paste e.g. by a blocking stencil. In the context of 3D printing, this technique is adapted to build layers of material to form a three-dimensional object. The choice of materials is guided by the intended application, whether it be for, for example, structural components, conductive paths, or biocompatible implants or onplants such as resorbable implants or implants resistant to resorption.

The adaptability of screen printing to different materials and its scalability make it an attractive option for manufacturing applications ranging from electronics to biomedical devices and pharmaceutical dosage forms. However, 3D screen printing has been limited by the lack of appropriate compositions which are suitable for efficiently printing stable 3D bodies. Compositions commonly used for 2D screen printing have been shown to be unsuitable for 3D screen printing, for example due to a lack of structural integrity of the obtained 3D bodies.

The composition used in 3D screen printing is highly important for the success of the screen printing process. For example, a proper flow through the screen and an adequate adhesion to the substrate have to be ensured. Additionally, the composition should be capable of forming stable layers that can be built upon to create the desired 3D structure. Thus, there is the need for compositions which are suitable for 3D screen printing. Furthermore, there remains the need for means for efficient 3D screen printing. Moreover, there remains the need for means to provide stabile 3D bodies. There also remains the need to adapt 3D screen printing to various applications.

### SUMMARY OF THE INVENTION

In the following, the elements of the invention will be described. These elements are listed with specific embodiments, however, it should be understood that they may be combined in any manner and in any number to create additional embodiments. The variously described examples and preferred embodiments should not be construed to limit the present invention to only the explicitly described embodiments. This description should be understood to support and encompass embodiments which combine two or more of the explicitly described embodiments or which combine the one or more of the explicitly described embodiments with any number of the disclosed and/or preferred elements. Furthermore, any permutations and combinations of all described elements in this application should be considered disclosed by the description of the present application unless the context indicates otherwise.

In a first aspect, the present invention relates to a use of a composition for three-dimensional screen printing, preferably rotary screen printing, of a three-dimensional body, wherein said composition comprises:
a first component selected from metals, ceramic materials, glasses, plastics, organic materials, and combinations thereof; wherein, preferably, said first component is present in said composition in an amount of at least 5 wt. %;
a second component selected from solvents and dispersing agents; wherein, preferably, said second component is present in said composition in an amount in a range of from 0.5 wt. % to 95 wt. %, preferably in a range of from 20 wt. % to 65 wt. %;
a third component selected from binders; wherein, preferably, said third component is present in said composition in an amount in a range of from 0.0001 wt. % to 95 wt. %, preferably in a range of from 0.0001 wt. % to 10 wt. %, more preferably in a range of from 0.001 wt. % to 5 wt. %, even more preferably in a range of from 0.1 wt. % to 1.5 wt. %; wherein, preferably, said composition is a solution or suspension, preferably a paste; wherein, optionally, said three-dimensional screen printing comprises separating the three-dimensional body from a screen printing support.

In one embodiment, said metals are selected from lithium, titanium, aluminum, iron, copper, molybdenum, palladium, tungsten, gold, silver, stainless steel, and combinations thereof; said ceramic materials are selected from silicon carbide, boron carbide, titanium carbide, cordierite, aluminum oxide, zirconium dioxide, silicon nitride, aluminum nitride, boron nitride, titanium nitride, barium titanate, magnesium titanate, calcium titanate, strontium titanate, bismuth titanate, titanium dioxide, magnesium oxide, beryllium oxide, barium oxide, ferrite, porcelain, steatite, forsterite, stoneware, earthenware, glass-ceramics, calcium phosphate ceramics, talcum, and combinations thereof;
said glasses are selected from silicate glasses, such as soda-lime glass, borosilicate glasses, and aluminosilicate glasses, lead glasses, phosphate glasses, halide glasses, chalcogenide glasses, and combinations thereof;
said plastics are selected from urethane acrylate oligomer, tri-acrylate oligomer, acrylic ester styrene acrylonitrile, acrylonitrile butadiene styrene, acrylonitrile-methyl methacrylate copolymer, acrylonitrile-butadiene-acrylate copolymer, acrylonitrile-chlorinated polyethylene-styrene copolymer, butadiene rubber, butyl rubber, casein plastics, cellulose acetate, cellulose hydrate, cellulose nitrate, chitin, chitosan, chlorobutadiene rubber, cyclo-olefin copolymers, epoxy resin, ethylene-ethyl acrylate copolymer, ethylene-propylene copolymer, ethylene-propylene-diene rubber, ethylene vinyl acetate, fluororubber, liquid crystal polymers, melamine-phenol formaldehyde, methyl acrylate-butadiene-styrene copolymer, perfluoroalkoxy alkane, phenol-formaldehyde resin, polyacrylonitrile, polyamide, polybutylene succinate, polybutylene terephthalate, polycaprolactone, polycarbonate, polychlorotrifluoroethylene, polyester, polyester-urethane rubber, polyesteramide, polyether block amide, polyetherimide, polyether ketone, polyether sulfone, polyethylene, polyethylene terephthalate, polyhydroxyalkanoates, polyhydroxybutyrate, polyimide, polyisobutylene, polylactic acid, polymethacrylimethylimide, poly(methyl methacrylate), polymethylpentene, polyoxymethylene, polyphenylene ether, polyphenylene sulfide, polyphthalamide, polypropylene, polypyrrole, polystyrene, polysulfone, polytetrafluoroethylene,
polytrimethylene terephthalate, polyurethane, polyvinyl acetate, polyvinyl butyral, polyvinyl chloride, polyvinylidene fluoride, polyvinylpyrrolidone, silicone rubber, styrene-acrylonitrile copolymer, styrene-butadiene rubber, styrene-butadiene-styrene, thermoplastic starch, vinyl chloride-ethylene-methacrylate copolymer, vinyl chloride-ethylene copolymer, and combinations thereof;
said organic materials are selected from alginate, chitosan, collagen, cells, cell products such as growth factors, active agents such as antibiotics and cytostatics, lactose, cellulose, starch, sucrose, paraffin, hard fat, polyethylene glycol, polyethylene oxide, and combinations thereof;
said solvents are selected from water, 1,1,1-trichloroethane, 1,4-dioxane, 1-butanol, 1-decanol, 1-octanol, 1-pentanol, 2-butanol, 2-ethyl-1-butanol, 2-ethylhexanol, propan-2-ol, 2-methyl-1-propanol, 2-methyl-2-propanol, 2-octanol, 3-methyl-1-butanol, 4-methyl-2-pentanol, acetone, acetonitrile, aniline, anisole, benzene, benzonitrile, benzyl alcohol, bromobenzene, quinoline, chlorobenzene, trichloromethane, cyclohexane, cyclohexanol, diacetone alcohol, dibutyl ether, diethylene glycol, diethyl ether, dimethylacetamide, dimethylformamide, dimethyl sulfoxide, glacial acetic acid, acetic anhydride, ethyl acetate, ethanol, ethylene dichloride, ethylene glycol, ethylene glycol dimethyl ether, formamide, hexanol, methanol, methylene chloride, methyl ethyl ketone, n-heptane, n-hexane, nitrobenzene, nitromethane, N-methyl-2-pyrrolidone, N-methylformamide, n-pentane, petroleum ether, piperidine, propanol, 4-methyl-1,3-dioxol-2-one, pyridine, carbon disulfide, sulfolane, tert-amyl alcohol, tert-butanol, tert-butyl methyl ether, tetrachloroethene, carbon tetrachloride, tetrahydrofuran, tetrahydrofurfuryl alcohol, toluene, trichloroethene, triethylamine, triethanolamine, triethyleneglycol, triethyleneglycol dimethyl ether, gamma-butyrolactone, and combinations thereof;
said dispersing agents are selected from L-glutamic-N,N-diacetic acid, diethylenetriamine, ethylenediaminetetraacetic acid, hydroxyethylethylenediaminetriacetic acid, nitrilotriacetic acid, sodium gluconate, gluconic acid, iminodisuccinate, polyaspartic acid, butanol, triethanolamine, paraffin, and combinations thereof; and/or
said binders are selected from paraffin, cellulose, fish oil, acrylic ester copolymer, acrylic polymer, alkali phosphates, ammonium alginate, carboxymethyl cellulose, dextrins, epoxy, ethylene oxide polymer, ethylene vinyl acetate, ethyl silicate, gum arabic, hydroxyethylcellulose, methyl cellulose, sodium alginate, sodium aluminate, sodium silicate, nitrocellulose, polyacrylamide, polyacrylate, polyacrylate ester, polyethylene, polyethylene glycol, poly(methyl methacrylate), polystyrene, polyvinyl acetate, polyvinyl alcohol, polyvinyl chloride, starch, styrene acrylonitrile, polyvinyl butyral, urethane acrylate, hydroxy ketone, benzophenone, cellulose acetate, cellulose acetate butyrate, waxes such as wax ester, Fischer-Tropsch wax, beeswax, paraffin wax, petroleum wax, and polyethylene wax, and combinations thereof.

In one embodiment, said composition further comprises at least one additive selected from liquifying agents, plasticizers, defoamers, wetting agents, thickeners, humectants, fillers, and combinations thereof;
wherein, optionally,
said liquifying agents are selected from humic acids, peptization aids, fish oil such as menhaden fish oil, aryl sulfonic acids such as benzene sulfonic acids, fatty acids such as glyceryl trioleate, alkali salts such as sodium salts, alkali silicates e.g. sodium silicate, alkali phosphates, alkali carbonates, alkali salts of tannic acids, alkali salts of humic acids, alkali salts of polycarboxylic acids, alkali salts of phosphonic acids, and combinations thereof, said plasticizers are selected from gelatin, dextrin, gum arabic, paraffin, butyl benzyl phthalate, butyl stearate, dibutyl phthalate, dimethyl phthalate, ethylene acrylic acid, ethylene vinyl acetate, ethyltoluene sulfonamide, glycerine, methyl abietate, methyl ethyl ketone, octyl phthalate, polyalcylene glycol such as polyethylene glycol, triethylene glycol hexoate, polyethylene copolymer, polypropylene copolymer, triethylene glycol, tri-n-butyl phosphate, vinyl acetate copolymer, phthalic acid ester, fish oil, and combinations thereof, said defoamers are selected from waxes,
said wetting agents are selected from alkyl polyether alcohol, arylphenyl glycol, fish oils, octylphenoxyethanol, oleic acids, polyoxyethylene acetate, polyethylene ester, polyethylene glycol, polyethylene oxide, polysorbate, polyethylene glycol ethyl ether, stearic acid, stearic acid-oleic acid monoamides, and combinations thereof,
said thickeners are selected from sodium monofluorophosphate, paper clay, polyurethane, acrylate polymers, starch, guar gum, xanthan gum, alginate, carrageenan, pectin, tragacanth, polyacrylic acid, polyvinylpyrrolidone, silicon dioxide, methylcellulose, ethylcellulose, hydroxypropylcellulose, hydroxypropylmethylcellulose, carboxymethylcellulose, and combinations thereof,
said humectants are selected from polyethylene glycol alkyl ether, and/or said fillers are selected from lactose, cellulose, starch, sucrose, paraffin, hard fat, polyethylene glycol, polyethylene oxide, and combinations thereof;
wherein, preferably, the composition comprises a liquifying agent, a plasticizer, and/or a thickener;
wherein, more preferably, the composition comprises
a liquifying agent in an amount in a range of from 0.0001 wt.% to 10 wt.%, preferably in an amount in a range of from 0.001 wt.% to 2% wt.%, more preferably in an amount in a range of from 0.001 wt.% to 0.5 wt.% such as in an amount in a range of from 0.001 wt.% to 0.05 wt.%,
a plasticizer in an amount of < 95 wt.%, preferably in an amount in a range of from 10 wt.% to 65 wt.%, and/or
a thickener in an amount in a range from 0.001 wt.% to 10 wt.%, preferably in an amount in a range from 0.01% wt.% to 3wt.%;
wherein, optionally, the composition comprises a defoamer, a wetting agent, or a combination thereof in an amount < 95 wt.%, preferably in an amount in a range of from 0.0001 wt.% to 5 wt.%.

In one embodiment, said first component is selected from metals, ceramic materials, glasses, and combinations thereof, and is present in said composition in an amount in a range of from 5 wt. % to 99.5 wt. %; or said first component is selected from plastics, organic materials, and combinations thereof, and is present in said composition in an amount in a range of from 5 wt. % to 100 wt. %; and/or
said first component is selected from silicon carbide, aluminum, tungsten, poly(methyl methacrylate), talcum, stainless steel, and combinations thereof.

In one embodiment, the composition has a density in a range of from 0.5 g/cm³ to 20 g/cm³; and/or
the composition has a viscosity of at least 3 dPa·s, preferably a viscosity in a range of from 5 to 30 dPa·s, as measured in accordance with standard DIN 53019.

In one embodiment, the composition comprises particles;
wherein, preferably, said particles have a particle size in a range of from 1 nm to 25 µm, preferably of from 50 nm to 25 µm;
wherein, more preferably, said particles have a D₅₀ in a range of from 0.5 µm to 5 µm and a D₉₀ in a range of from 2.5 µm to 20 µm;
wherein, optionally, said particles have a D₁₀₀ in a range of from 25 µm to 35 µm.

In one embodiment, said first component is a metal, preferably stainless steel, more preferably stainless steel particles;
said second component is a dispersing agent, preferably selected from butanol, triethanolamine, and combinations thereof;
said third component is polyvinyl butyral;
wherein, preferably, said composition further comprises a plasticizer selected from phthalic acid ester, polyethylene glycol, and a combination thereof;
wherein, optionally, said composition comprises
   said first component, preferably stainless steel, in an amount in a range of from 40 wt.% to 65 wt.%, preferably in a range of from 50 wt.% to 56 wt.%, more preferably in a range of from 52 wt.% to 54 wt.%, even more preferably of about 53 wt.%,
   said second component in an amount in a range of from 15 wt.% to 40 wt.%, preferably in a range of from 20 wt.% to 35 wt.%, more preferably in a range of from 25 wt.% to 30 wt.%, even more preferably of about 27.3 wt.%, for example butanol in
   an amount of about 26 wt.% and triethanolamine in an amount of about 1.3 wt.%, said third component in an amount in a range of from 4 wt.% to 10 wt.%, preferably in a range of from 5 wt.% to 9 wt.%, more preferably in a range of from 6 wt.% to 8 wt.%, even more preferably of about 6.9 wt.%,
   said plasticizer, if present, in an amount in a range of from 5 wt.% to 20 wt.%, preferably in a range of from 10 wt.% to 15 wt.%, more preferably in a range of from 12 wt.% to 13.5 wt.%, even more preferably of about 12.8 wt.%, for example phthalic
   acid ester in an amount of about 6 wt.% and polyethylene glycol in an amount of about 6.9 wt.%.

In one embodiment, said first component is a ceramic material, preferably a silicon carbide ceramic, more preferably silicon carbide ceramic particles;
said second component is water;
said third component is dextrin;
wherein, preferably, said composition further comprises a plasticizer, preferably a fish oil; wherein, optionally, said composition further comprises potassium hydroxide;
wherein, optionally, said composition comprises
   said first component in an amount in a range of from 40 wt.% to 80 wt.%, preferably in a range of from 50 wt.% to 70 wt.%, more preferably in a range of from 55 wt.% to 67 wt.%, even more preferably of about 58.3 wt.% or about 62.7 wt.%,
   said second component in an amount in a range of from 25 wt.% to 40 wt.%, preferably in a range of from 28 wt.% to 36 wt.%, more preferably in a range of from 30 wt.% to 35 wt.%, even more preferably of about 31.1 wt.% or about 33.5 wt.%,
   said third component in an amount in a range of from 0.01 wt.% to 3 wt.%, preferably in a range of from 0.1 wt.% to 1 wt.%, more preferably in a range of from 0.2 wt.% to 0.6 wt.%, even more preferably of about 0.4 wt.%,
   said plasticizer, if present, in an amount in a range of from 1 wt.% to 15 wt.%, preferably in a range of from 3 wt.% to 10 wt.%, more preferably in a range of from 6 wt.% to 8 wt.%, even more preferably of about 7 wt.%,
   said potassium hydroxide, if present, in an amount in a range of from 0.001 wt.% to 0.1 wt.%, preferably in a range of from 0.01 wt.% to 0.08 wt.%, more preferably in a range of from 0.02 wt.% to 0.06 wt.%, even more preferably of about 0.04 wt.%.

In one embodiment, said first component is a ceramic material, preferably a silicon carbide ceramic, more preferably silicon carbide ceramic particles;
said second component is an organic solvent, preferably ethanol, trichloroethene, or a combination thereof;
said third component is polyvinyl butyral;
wherein, preferably, said composition further comprises a plasticizer selected from fish oil, polyethylene glycol, and a combination thereof;
wherein, optionally, said composition comprises
   said first component in an amount in a range of from 20 wt.% to 60 wt.%, preferably in a range of from 30 wt.% to 50 wt.%, more preferably in a range of from 35 wt.% to 45 wt.%, even more preferably of about 39.5 wt.%,
   said second component in an amount in a range of from 30 wt.% to 60 wt.%, preferably in a range of from 40 wt.% to 55 wt.%, more preferably in a range of from 45 wt.% to 50 wt.%, even more preferably of about 47.5 wt.%,
   said third component in an amount in a range of from 0.01 wt.% to 3 wt.%, preferably in a range of from 0.1 wt.% to 2 wt.%, more preferably in a range of from 0.6 wt.% to 1 wt.%, even more preferably of about 0.8 wt.%,
   said plasticizer, if present, in an amount in a range of from 5 wt.% to 20 wt.%, preferably in a range of from 10 wt.% to 15 wt.%, more preferably in a range of from 11 wt.% to 13 wt.%, even more preferably of about 12.2 wt.%, for example fish oil in an amount of about 0.2 wt.% and polyethylene glycol in an amount of about 12 wt.%.

In one embodiment, said first component comprises a glass, silver, or a combination thereof, preferably comprises a glass and silver, more preferably a glass frit and silver;
said second component is a dispersing agent, optionally is paraffin;
said third component is paraffin;
wherein, optionally, said composition comprises
   said glass in an amount in a range of from 40 wt.% to 80 wt.%, preferably in a range of from 50 wt.% to 70 wt.%, more preferably in a range of from 60 wt.% to 65 wt.%, even more preferably of about 63.5 wt.%,
   said silver in an amount in a range of from 5 wt.% to 25 wt.%, preferably in a range of from 10 wt.% to 20 wt.%, more preferably in a range of from 14 wt.% to 17 wt.%, even more preferably of about 15.9 wt.%,
   said second component in an amount in a range of from 10 wt.% to 30 wt.%, preferably in a range of from 15 wt.% to 25 wt.%, more preferably in a range of from 18 wt.% to 21 wt.%, even more preferably of about 19.8 wt.%,
   said third component in an amount in a range of from 0.1 wt.% to 1.5 wt.%, preferably in a range of from 0.5 wt.% to 1 wt.%, more preferably in a range of from 0.7 wt.% to 0.9 wt.%, even more preferably of about 0.8 wt.%.

In one embodiment, said first component comprises urethane acrylate oligomer, talcum, tri-acrylate oligomer, or a combination thereof;
said second component is a dispersing agent, preferably comprising acrylate monomers; said third component comprises urethane acrylate, hydroxy ketone, benzophenone, or a combination thereof;
wherein, preferably, said composition further comprises silicone-acrylate, polyethersiloxane copolymer, or a combination thereof;
wherein, optionally, said composition comprises
   said urethane acrylate oligomer in an amount in a range of from 40 wt.% to 65 wt.%, preferably in a range of from 45 wt.% to 60 wt.%, more preferably in a range of from 52 wt.% to 55 wt.%, even more preferably of about 53.5 wt.%,
   said talcum in an amount in a range of from 0.01 wt.% to 0.4 wt.%, preferably in a range of from 0.15 wt.% to 0.3 wt.%, more preferably in a range of from 0.2 wt.% to 0.25 wt.%, even more preferably of about 0.22 wt.%,
   said tri-acrylate oligomer in an amount in a range of from 5 wt.% to 15 wt.%, preferably in a range of from 6 wt.% to 12 wt.%, more preferably in a range of from 8 wt.% to 10 wt.%, even more preferably of about 8.9 wt.%,
   said acrylate monomers in an amount in a range of from 25 wt.% to 45 wt.%, preferably in a range of from 30 wt.% to 40 wt.%, more preferably in a range of from 33 wt.% to 38 wt.%, even more preferably of about 35.7 wt.%,
   said urethane acrylate in an amount in a range of from 0.01 wt.% to 1 wt.%, preferably in a range of from 0.1 wt.% to 0.5 wt.%, more preferably in a range of from 0.2 wt.% to 0.4 wt.%, even more preferably of about 0.27 wt.%,
   said hydroxy ketone in an amount in a range of from 0.1 wt.% to 2 wt.%, preferably in a range of from 0.5 wt.% to 1.5 wt.%, more preferably in a range of from 0.8 wt.% to 1 wt.%, even more preferably of about 0.89 wt.%,
   said benzophenone in an amount in a range of from 0.01 wt.% to 2 wt.%, preferably in a range of from 0.1 wt.% to 1 wt.%, more preferably in a range of from 0.3 wt.% to 0.6 wt.%, even more preferably of about 0.45 wt.%,
   said silicone-acrylate, if present, in an amount in a range of from 0.001 wt.% to 0.1 wt.%, preferably in a range of from 0.01 wt.% to 0.08 wt.%, more preferably in a range of from 0.02 wt.% to 0.06 wt.%, even more preferably of about 0.04 wt.%.

In one embodiment, said first component comprises collagen such as collagen type I fibers, collagen hydrolysate, or a combination thereof;
said second component comprises water;
said third component comprises cellulose acetate;
wherein, preferably, said composition further comprises cells, a cell product such as a growth factor, an active agent, or a combination thereof;
wherein, optionally, said composition comprises
   said collagen in an amount in a range of from 35 wt.% to 65 wt.%, preferably in a range of from 40 wt.% to 55 wt.%, more preferably in a range of from 45 wt.% to 50 wt.%, even more preferably of about 47.4 wt.%,
   said collagen hydrolysate in an amount in a range of from 10 wt.% to 35 wt.%, preferably in a range of from 20 wt.% to 28 wt.%, more preferably in a range of from 22 wt.% to 25 wt.%, even more preferably of about 23.7 wt.%,
   said water in an amount in a range of from 10 wt.% to 40 wt.%, preferably in a range of from 20 wt.% to 35 wt.%, more preferably in a range of from 27 wt.% to 30 wt.%, even more preferably of about 28.5 wt.%,
   said cellulose acetate in an amount in a range of from 0.01 wt.% to 1 wt.%, preferably in a range of from 0.1 wt.% to 0.5 wt.%, more preferably in a range of from 0.2 wt.% to 0.4 wt.%, even more preferably of about 0.28 wt.%,
   said growth factors, if present, in an amount in a range of from 0.001 wt.% to 0.1 wt.%, preferably in a range of from 0.01 wt.% to 0.08 wt.%, more preferably in a range of from 0.03 wt.% to 0.07 wt.%, even more preferably of about 0.05 wt.%, said cells, if present, in an amount in a range of from 0.01 wt.% to 1 wt.%, preferably in a range of from 0.05 wt.% to 0.5 wt.%, more preferably in a range of from 0.07 wt.% to 0.15 wt.%, even more preferably of about 0.11 wt.%.

In a further aspect, the present invention relates to a composition for three-dimensional screen printing, preferably rotary screen printing, of a three-dimensional body, comprising
a first component selected from metals, ceramic materials, glasses, plastics, organic materials, and combinations thereof;
a second component selected from solvents and dispersing agents; and
a third component selected from binders;
wherein
a) said first component is a metal, preferably stainless steel, more preferably stainless steel particles;
   wherein said second component is a dispersing agent, preferably selected from butanol, triethanolamine, and combinations thereof;
   wherein said third component is polyvinyl butyral;
   wherein, preferably, said composition further comprises a plasticizer selected from phthalic acid ester, polyethylene glycol, and a combination thereof;
   wherein, optionally, said composition comprises
      said first component, preferably stainless steel, in an amount in a range of from 40 wt.% to 65 wt.%, preferably in a range of from 50 wt.% to 56 wt.%, more preferably in a range of from 52 wt.% to 54 wt.%, even more preferably of about 53 wt.%,
      said second component in an amount in a range of from 15 wt.% to 40 wt.%, preferably in a range of from 20 wt.% to 35 wt.%, more preferably in a range of from 25 wt.% to 30 wt.%, even more preferably of about 27.3 wt.%, for example butanol in an amount of about 26 wt.% and triethanolamine in an amount of about 1.3 wt.%,
      said third component in an amount in a range of from 4 wt.% to 10 wt.%, preferably in a range of from 5 wt.% to 9 wt.%, more preferably in a range of from 6 wt.% to 8 wt.%, even more preferably of about 6.9 wt.%,
      said plasticizer, if present, in an amount in a range of from 5 wt.% to 20 wt.%, preferably in a range of from 10 wt.% to 15 wt.%, more preferably in a range of from 12 wt.% to 13.5 wt.%, even more preferably of about 12.8 wt.%, for example phthalic acid ester in an amount of about 6 wt.% and polyethylene glycol in an amount of about 6.9 wt.%;
   or wherein
b) said first component is a ceramic material, preferably a silicon carbide ceramic, more preferably silicon carbide ceramic particles;
   wherein said second component is water;
   wherein said third component is dextrin;
   wherein, preferably, said composition further comprises a plasticizer, preferably a fish oil;
   wherein, optionally, said composition further comprises potassium hydroxide;
   wherein, optionally, said composition comprises
      said first component in an amount in a range of from 40 wt.% to 80 wt.%, preferably in a range of from 50 wt.% to 70 wt.%, more preferably in a range of from 55 wt.% to 67 wt.%, even more preferably of about 58.3 wt.% or about 62.7 wt.%,
      said second component in an amount in a range of from 25 wt.% to 40 wt.%, preferably in a range of from 28 wt.% to 36 wt.%, more preferably in a range of from 30 wt.% to 35 wt.%, even more preferably of about 31.1 wt.% or about 33.5 wt.%,
      said third component in an amount in a range of from 0.01 wt.% to 3 wt.%, preferably in a range of from 0.1 wt.% to 1 wt.%, more preferably in a range of from 0.2 wt.% to 0.6 wt.%, even more preferably of about 0.4 wt.%,
      said plasticizer, if present, in an amount in a range of from 1 wt.% to 15 wt.%, preferably in a range of from 3 wt.% to 10 wt.%, more preferably in a range of from 6 wt.% to 8 wt.%, even more preferably of about 7 wt.%,
      said potassium hydroxide, if present, in an amount in a range of from 0.001 wt.% to 0.1 wt.%, preferably in a range of from 0.01 wt.% to 0.08 wt.%, more preferably in a range of from 0.02 wt.% to 0.06 wt.%, even more preferably of about 0.04 wt.%;
   or wherein
c) said first component is a ceramic material, preferably a silicon carbide ceramic, more preferably silicon carbide ceramic particles;
   wherein said second component is an organic solvent, preferably ethanol, trichloroethene, or a combination thereof;
   wherein said third component is polyvinyl butyral;
   wherein, preferably, said composition further comprises a plasticizer selected from fish oil, polyethylene glycol, and a combination thereof;
   wherein, optionally, said composition comprises
      said first component in an amount in a range of from 20 wt.% to 60 wt.%, preferably in a range of from 30 wt.% to 50 wt.%, more preferably in a range of from 35 wt.% to 45 wt.%, even more preferably of about 39.5 wt.%, said second component in an amount in a range of from 30 wt.% to 60 wt.%, preferably in a range of from 40 wt.% to 55 wt.%, more preferably in a range of from 45 wt.% to 50 wt.%, even more preferably of about 47.5 wt.%, said third component in an amount in a range of from 0.01 wt.% to 3 wt.%, preferably in a range of from 0.1 wt.% to 2 wt.%, more preferably in a range of from 0.6 wt.% to 1 wt.%, even more preferably of about 0.8 wt.%,
      said plasticizer, if present, in an amount in a range of from 5 wt.% to 20 wt.%, preferably in a range of from 10 wt.% to 15 wt.%, more preferably in a range of from 11 wt.% to 13 wt.%, even more preferably of about 12.2 wt.%, for example fish oil in an amount of about 0.2 wt.% and polyethylene glycol in an amount of about 12 wt.%;
   or wherein
d) said first component comprises a glass, silver, or a combination thereof, preferably
   comprises a glass and silver, more preferably a glass frit and silver;
   wherein said second component is a dispersing agent, optionally is paraffin; wherein said third component is paraffin;
   wherein, optionally, said composition comprises
      said glass in an amount in a range of from 40 wt.% to 80 wt.%, preferably in a range of from 50 wt.% to 70 wt.%, more preferably in a range of from 60 wt.% to 65 wt.%, even more preferably of about 63.5 wt.%,
      said silver in an amount in a range of from 5 wt.% to 25 wt.%, preferably in a range of from 10 wt.% to 20 wt.%, more preferably in a range of from 14 wt.% to 17 wt.%, even more preferably of about 15.9 wt.%,
      said second component in an amount in a range of from 10 wt.% to 30 wt.%, preferably in a range of from 15 wt.% to 25 wt.%, more preferably in a range of from 18 wt.% to 21 wt.%, even more preferably of about 19.8 wt.%,
      said third component in an amount in a range of from 0.1 wt.% to 1.5 wt.%, preferably in a range of from 0.5 wt.% to 1 wt.%, more preferably in a range of from 0.7 wt.% to 0.9 wt.%, even more preferably of about 0.8 wt.%;
   or wherein
e) said first component comprises urethane acrylate oligomer, talcum, tri-acrylate
   oligomer, or a combination thereof;
   wherein said second component is a dispersing agent, preferably comprising acrylate monomers;
   wherein said third component comprises urethane acrylate, hydroxy ketone, benzophenone, or a combination thereof;
   wherein, preferably, said composition further comprises silicone-acrylate, polyethersiloxane copolymer, or a combination thereof;
   wherein, optionally, said composition comprises
      said urethane acrylate oligomer in an amount in a range of from 40 wt.% to 65 wt.%, preferably in a range of from 45 wt.% to 60 wt.%, more preferably in a range of from 52 wt.% to 55 wt.%, even more preferably of about 53.5 wt.%, said talcum in an amount in a range of from 0.01 wt.% to 0.4 wt.%, preferably in a range of from 0.15 wt.% to 0.3 wt.%, more preferably in a range of from 0.2 wt.% to 0.25 wt.%, even more preferably of about 0.22 wt.%,
      said tri-acrylate oligomer in an amount in a range of from 5 wt.% to 15 wt.%, preferably in a range of from 6 wt.% to 12 wt.%, more preferably in a range of from 8 wt.% to 10 wt.%, even more preferably of about 8.9 wt.%,
      said acrylate monomers in an amount in a range of from 25 wt.% to 45 wt.%, preferably in a range of from 30 wt.% to 40 wt.%, more preferably in a range of from 33 wt.% to 38 wt.%, even more preferably of about 35.7 wt.%, said urethane acrylate in an amount in a range of from 0.01 wt.% to 1 wt.%, preferably in a range of from 0.1 wt.% to 0.5 wt.%, more preferably in a range of from 0.2 wt.% to 0.4 wt.%, even more preferably of about 0.27 wt.%, said hydroxy ketone in an amount in a range of from 0.1 wt.% to 2 wt.%, preferably in a range of from 0.5 wt.% to 1.5 wt.%, more preferably in a range of from 0.8 wt.% to 1 wt.%, even more preferably of about 0.89 wt.%, said benzophenone in an amount in a range of from 0.01 wt.% to 2 wt.%, preferably in a range of from 0.1 wt.% to 1 wt.%, more preferably in a range of from 0.3 wt.% to 0.6 wt.%, even more preferably of about 0.45 wt.%, said silicone-acrylate, if present, in an amount in a range of from 0.001 wt.% to 0.1 wt.%, preferably in a range of from 0.01 wt.% to 0.08 wt.%, more preferably in a range of from 0.02 wt.% to 0.06 wt.%, even more preferably of about 0.04 wt.%;
   or wherein
f) said first component comprises collagen such as collagen type I fibers, collagen
   hydrolysate, or a combination thereof;
   wherein said second component comprises water;
   wherein said third component comprises cellulose acetate;
   wherein, preferably, said composition further comprises cells, a cell product such as a growth factor, an active agent, or a combination thereof;
   wherein, optionally, said composition comprises
      said collagen in an amount in a range of from 35 wt.% to 65 wt.%, preferably in a range of from 40 wt.% to 55 wt.%, more preferably in a range of from 45 wt.% to 50 wt.%, even more preferably of about 47.4 wt.%,
      said collagen hydrolysate in an amount in a range of from 10 wt.% to 35 wt.%, preferably in a range of from 20 wt.% to 28 wt.%, more preferably in a range of from 22 wt.% to 25 wt.%, even more preferably of about 23.7 wt.%,
      said water in an amount in a range of from 10 wt.% to 40 wt.%, preferably in a range of from 20 wt.% to 35 wt.%, more preferably in a range of from 27 wt.% to 30 wt.%, even more preferably of about 28.5 wt.%,
      said cellulose acetate in an amount in a range of from 0.01 wt.% to 1 wt.%, preferably in a range of from 0.1 wt.% to 0.5 wt.%, more preferably in a range of from 0.2 wt.% to 0.4 wt.%, even more preferably of about 0.28 wt.%, said growth factors, if present, in an amount in a range of from 0.001 wt.% to 0.1 wt.%, preferably in a range of from 0.01 wt.% to 0.08 wt.%, more preferably in a range of from 0.03 wt.% to 0.07 wt.%, even more preferably of about 0.05 wt.%,
      said cells, if present, in an amount in a range of from 0.01 wt.% to 1 wt.%, preferably in a range of from 0.05 wt.% to 0.5 wt.%, more preferably in a range of from 0.07 wt.% to 0.15 wt.%, even more preferably of about 0.11 wt.%.

In this aspect, said first component, said second component, said third component, said metals, said ceramic materials, said glasses, said plastics, said organic materials, said solvents, said dispersing agents, said binders, and said amounts are as defined herein.

In a further aspect, the present invention relates to a method of three-dimensional screen printing a three-dimensional body, comprising
i) applying a first layer of a composition to a support;
ii) preferably, applying one or more, preferably a plurality of further layers of said composition to said first layer;

wherein, optionally, said method comprises a step of contacting said first layer and optionally, if present, said one or more, preferably a plurality of further layers, with any of light, laser, microwaves, x-rays, heat, cold, humidity, air, vacuum, a cross-linking agent, or a combination thereof; wherein, preferably, said method comprises a step of drying said first layer and optionally said one or more, preferably a plurality of further layers;
wherein said composition is a composition as defined herein, and/or is a composition comprising
   a first component selected from metals, ceramic materials, glasses, plastics, organic materials, and combinations thereof; wherein, preferably, said first component is present in said composition in an amount of at least 5 wt. %;
   a second component selected from solvents and dispersing agents; wherein, preferably, said second component is present in said composition in an amount in a range of from 0.5 wt. % to 95 wt. %, preferably in a range of from 20 wt. % to 65 wt. %;
   a third component selected from binders; wherein, preferably, said third component is present in said composition in an amount in a range of from 0.0001 wt. % to 95 wt. %, preferably in a range of from 0.0001 wt. % to 10 wt. %, more preferably in a range of from 0.001 wt. % to 5 wt. %, even more preferably in a range of from 0.1 wt. % to 1.5 wt. %.

In one embodiment, said composition comprises at least one additive selected from liquifying agents, plasticizers, defoamers, wetting agents, thickeners, humectants, fillers, and combinations thereof;
wherein, optionally,
said liquifying agents are selected from humic acids, peptization aids, fish oil such as menhaden fish oil, aryl sulfonic acids such as benzene sulfonic acids, fatty acids such as glyceryl trioleate, alkali salts such as sodium salts, alkali silicates e.g. sodium silicate, alkali phosphates, alkali carbonates, alkali salts of tannic acids, alkali salts of humic acids, alkali salts of polycarboxylic acids, alkali salts of phosphonic acids, and combinations thereof,
said plasticizers are selected from gelatin, dextrin, gum arabic, paraffin, butyl benzyl phthalate, butyl stearate, dibutyl phthalate, dimethyl phthalate, ethylene acrylic acid, ethylene vinyl acetate, ethyltoluene sulfonamide, glycerine, methyl abietate, methyl ethyl ketone, octyl phthalate, polyalcylene glycol such as polyethylene glycol, triethylene glycol hexoate, polyethylene copolymer, polypropylene copolymer, triethylene glycol, tri-n-butyl phosphate, vinyl acetate copolymer, phthalic acid ester, fish oil, and combinations thereof,
said defoamers are selected from waxes,
said wetting agents are selected from alkyl polyether alcohol, arylphenyl glycol, fish oils, octylphenoxyethanol, oleic acids, polyoxyethylene acetate, polyethylene ester, polyethylene glycol ethyl ether, stearic acid, stearic acid-oleic acid monoamides, and combinations thereof,
said thickeners are selected from sodium monofluorophosphate, paper clay, polyurethane, acrylate polymers, starch, guar gum, xanthan gum, alginate, carrageenan, pectin, tragacanth, polyacrylic acid, polyvinylpyrrolidone, silicon dioxide, methylcellulose, ethylcellulose, hydroxypropylcellulose, hydroxypropylmethylcellulose, carboxymethylcellulose, and combinations thereof, said humectants are selected from polyethylene glycol alkyl ether, and/or said fillers are selected from lactose, cellulose, starch, sucrose, paraffin, hard fat,
polyethylene glycol, polyethylene oxide, and combinations thereof;

wherein, preferably, the composition comprises a liquifying agent, a plasticizer, and/or a thickener;
wherein, more preferably, the composition comprises
   a liquifying agent in an amount in a range of from 0.0001 wt.% to 10 wt.%, preferably in an amount in a range of from 0.001 wt.% to 2% wt.%, more preferably in an amount in a range of from 0.001 wt.% to 0.5 wt.% such as in an amount in a range of from 0.001 wt.% to 0.05 wt.%,
   a plasticizer in an amount of < 95 wt.%, preferably in an amount in a range of from 10 wt.% to 65 wt.%, and/or
   a thickener in an amount in a range from 0.001 wt.% to 10 wt.%, preferably in an
   amount in a range from 0.01% wt.% to 3wt.%;
wherein, optionally, the composition comprises a defoamer, a wetting agent, or a combination thereof in an amount < 95 wt.%, preferably in an amount in a range of from 0.0001 wt.% to 5 wt.%.

In this aspect, said composition, said first component, said second component, said third component, said metals, said ceramic materials, said glasses, said plastics, said organic materials, said solvents, said dispersing agents, said binders, said amounts, said liquifying agents, said plasticizers, said defoamers, said wetting agents, said thickeners, said humectants, and said fillers are as defined herein.

### DETAILED DESCRIPTION

The present invention relates to the use of a novel composition for three-dimensional screen printing, particularly suited for rotary screen printing of three-dimensional bodies. The composition comprises a first component selected from a wide range of materials, including metals, ceramics, and plastics, ensuring versatility across various applications. The inclusion of solvents and dispersing agents facilitates the formation of a homogenous mixture, while binders provide the necessary structural support during and after the printing process. The invention aims to address the limitations of existing 3D screen printing compositions by offering improved printability, layer adhesion, and mechanical properties of the composition as well as surface optimization and a reduced inhomogeneity of the printed body. By optimizing the composition's formulation, the invention enhances the efficiency and quality of three-dimensional screen printing, paving the way for its broader adoption in industrial and commercial applications.

In a first aspect, the present invention relates to a use of a composition for three-dimensional screen printing, preferably rotary screen printing, of a three-dimensional body, wherein said composition comprises:
a first component selected from metals, ceramic materials, glasses, plastics, organic materials, and combinations thereof;
a second component selected from solvents and dispersing agents; and a third component selected from binders.

The choice of materials, such as the choice of first material, is guided by the intended application, for example whether it be for structural components, conductive paths, biocompatible implants, or pharmaceutical dosage forms.

In a preferred embodiment, said first component is present in said composition in an amount of at least 5 wt. %. In a preferred embodiment, said second component is present in said composition in an amount in a range of from 0.5 wt. % to 95 wt. %, preferably in a range of from 20 wt. % to 65 wt. %. In a preferred embodiment, said third component is present in said composition in an amount in a range of from 0.0001 wt. % to 95 wt. %, preferably in a range of from 0.0001 wt. % to 10 wt. %, more preferably in a range of from 0.001 wt. % to 5 wt. %, even more preferably in a range of from 0.1 wt. % to 1.5 wt. %. The inventors have found that compositions comprising a first component, a second component, and a third component in the specified amounts of materials are highly useful in three-dimensional screen printing. For example, such compositions allow for the creation of complex 3D structures with enhanced mechanical and thermal properties using 3D screen printing.

In a preferred embodiment, said composition is a solution or suspension, preferably a paste.

Advantageously, a composition in the form of a solution or suspension, particularly paste, allows for precise control over the deposition of each layer, resulting in accurate and consistent printing of complex 3D structures. For example, a composition in the form of a paste ensures that the material has the right viscosity and flow properties for screen printing. Optionally, said three-dimensional screen printing comprises separating the three-dimensional body from a screen printing support. For example, by separating the three-dimensional body from the screen printing support, a three-dimensional body may be produced which comprises only materials of the composition and which does not comprise the material of the screen printing support. The terms "screen printing support" and "support", as used herein, may be used interchangeably. Advantageously, the composition for three-dimensional screen printing, preferably rotary screen printing, provides sufficient stability and thereby allows to separate the printed body from the support to produce a body consisting only of the printed body. The support may be discarded or reused for the next printing process.

In one embodiment, said metals are selected from lithium, titanium, aluminum, iron, copper, molybdenum, palladium, tungsten, gold, silver, stainless steel, and combinations thereof. The term "metals", as used herein, is meant to be understood as referring to metals, such as chemically pure metals, and to alloys comprising at least one metal. For example, the metal may be a metal in the form of a metal alloy. In one embodiment, said metal is present in a form of an alloy. In one embodiment, said ceramic materials are selected from silicon carbide, boron carbide, titanium carbide, cordierite, aluminum oxide, zirconium dioxide, silicon nitride, aluminum nitride, boron nitride, titanium nitride, barium titanate, magnesium titanate, calcium titanate, strontium titanate, bismuth titanate, titanium dioxide, magnesium oxide, beryllium oxide, barium oxide, ferrite, porcelain, steatite, forsterite, stoneware, earthenware, glass-ceramics, calcium phosphate ceramics, talcum, and combinations thereof. The term "ceramic materials", as used herein, is meant to be understood as referring to, for example, ceramics and raw materials thereof. In one embodiment, said glasses are selected from silicate glasses, such as soda-lime glass, borosilicate glasses, and aluminosilicate glasses, lead glasses, phosphate glasses, halide glasses, chalcogenide glasses, and combinations thereof. In one embodiment, said plastics are selected from urethane acrylate oligomer, tri-acrylate oligomer, acrylic ester styrene acrylonitrile, acrylonitrile butadiene styrene, acrylonitrile-methyl methacrylate copolymer, acrylonitrile-butadiene-acrylate copolymer, acrylonitrile-chlorinated polyethylene-styrene copolymer, butadiene rubber, butyl rubber, casein plastics, cellulose acetate, cellulose hydrate, cellulose nitrate, chitin, chitosan, chlorobutadiene rubber, cyclo-olefin copolymers, epoxy resin, ethylene-ethyl acrylate copolymer, ethylene-propylene copolymer, ethylene-propylene-diene rubber, ethylene vinyl acetate, fluororubber, liquid crystal polymers, melamine-phenol formaldehyde, methyl acrylate-butadiene-styrene copolymer, perfluoroalkoxy alkane, phenol-formaldehyde resin, polyacrylonitrile, polyamide, polybutylene succinate, polybutylene terephthalate, polycaprolactone, polycarbonate, polychlorotrifluoroethylene, polyester, polyester-urethane rubber, polyesteramide, polyether block amide, polyetherimide, polyether ketone, polyether sulfone, polyethylene, polyethylene terephthalate, polyhydroxyalkanoates, polyhydroxybutyrate, polyimide, polyisobutylene, polylactic acid, polymethacrylimethylimide, poly(methyl methacrylate), polymethylpentene, polyoxymethylene, polyphenylene ether, polyphenylene sulfide, polyphthalamide, polypropylene, polypyrrole, polystyrene, polysulfone, polytetrafluoroethylene, polytrimethylene terephthalate, polyurethane, polyvinyl acetate, polyvinyl butyral, polyvinyl chloride, polyvinylidene fluoride, polyvinylpyrrolidone, silicone rubber, styrene-acrylonitrile copolymer, styrene-butadiene rubber, styrene-butadiene-styrene, thermoplastic starch, vinyl chloride-ethylene-methacrylate copolymer, vinyl chloride-ethylene copolymer, and combinations thereof. Compositions comprising plastics are highly advantageous in that they may be molded into various shapes.

In one embodiment, said organic materials are selected from alginate, chitosan, collagen, cells, cell products such as growth factors, active agents such as antibiotics and cytostatics, lactose, cellulose, starch, sucrose, paraffin, hard fat, polyethylene glycol, polyethylene oxide, and combinations thereof. For example, a composition comprising organic materials such as starch and/or sucrose may be used to produce pharmaceutical dosage forms such as tablets or pills by 3D screen printing or to produce implants or onplants by 3D screen printing. The production of pharmaceutical dosage form such as tables or pills using 3D screen printing is highly efficient.

For example, the first component may be a combination of a metal and an organic material, such as silver and collagen, which may be used, for example, for printing an implant having antibacterial activity. For example, the first component may be a combination of a metal and a ceramic material, such as cordierite and platinum, or such as palladium and rhodium, which may be used, for example, for printing a catalyst. For example, the first component may be a combination of a metal and a glass, such as copper and a glass, which may be used, for example, for printing glassware.

In one embodiment, said solvents are selected from water, 1,1,1-trichloroethane, 1,4-dioxane, 1-butanol, 1-decanol, 1-octanol, 1-pentanol, 2-butanol, 2-ethyl-1-butanol, 2-ethylhexanol, propan-2-ol, 2-methyl-1-propanol, 2-methyl-2-propanol, 2-octanol, 3-methyl-1-butanol, 4-methyl-2-pentanol, acetone, acetonitrile, aniline, anisole, benzene, benzonitrile, benzyl alcohol, bromobenzene, quinoline, chlorobenzene, trichloromethane, cyclohexane, cyclohexanol, diacetone alcohol, dibutyl ether, diethylene glycol, diethyl ether, dimethylacetamide, dimethylformamide, dimethyl sulfoxide, glacial acetic acid, acetic anhydride, ethyl acetate, ethanol, ethylene dichloride, ethylene glycol, ethylene glycol dimethyl ether, formamide, hexanol, methanol, methylene chloride, methyl ethyl ketone, n-heptane, n-hexane, nitrobenzene, nitromethane, N-methyl-2-pyrrolidone, N-methylformamide, n-pentane, petroleum ether, piperidine, propanol, 4-methyl-1,3-dioxol-2-one, pyridine, carbon disulfide, sulfolane, tert-amyl alcohol, tert-butanol, tert-butyl methyl ether, tetrachloroethene, carbon tetrachloride, tetrahydrofuran, tetrahydrofurfuryl alcohol, toluene, trichloroethene, triethylamine, triethanolamine, triethyleneglycol, triethyleneglycol dimethyl ether, gamma-butyrolactone, and combinations thereof. The solvents mentioned herein may also be used as diluents in a composition as defined herein. The presence of a solvent in a composition allows for fine-tuning the consistency, e.g. viscosity, of the composition to provide a composition which is highly useful for 3D screen printing. For example, the solvents may be selected from water, organic solvents, and combinations thereof.

In one embodiment, said dispersing agents are selected from L-glutamic-N,N-diacetic acid, diethylenetriamine, ethylenediaminetetraacetic acid, hydroxyethylethylenediaminetriacetic acid, nitrilotriacetic acid, sodium gluconate, gluconic acid, iminodisuccinate, polyaspartic acid, butanol, triethanolamine, paraffin, and combinations thereof. The presence of a dispersing agent in a composition for 3D screen printing, such as in a paste, leads to better print quality and to a more reliable manufacturing process, e.g. by providing an improved particle distribution and/or an enhanced stability of the composition, such as an enhanced stability of a composition in the form of a suspension.

In one embodiment, said binders are selected from paraffin, cellulose, fish oil, acrylic ester copolymer, acrylic polymer, alkali phosphates, ammonium alginate, carboxymethyl cellulose, dextrins, epoxy, ethylene oxide polymer, ethylene vinyl acetate, ethyl silicate, gum arabic, hydroxyethylcellulose, methyl cellulose, sodium alginate, sodium aluminate, sodium silicate, nitrocellulose, polyacrylamide, polyacrylate, polyacrylate ester, polyethylene, polyethylene glycol, poly(methyl methacrylate), polystyrene, polyvinyl acetate, polyvinyl alcohol, polyvinyl chloride, starch, styrene acrylonitrile, polyvinyl butyral, urethane acrylate, hydroxy ketone, benzophenone, cellulose acetate, cellulose acetate butyrate, waxes such as wax ester, Fischer-Tropsch wax, beeswax, paraffin wax, petroleum wax, and polyethylene wax, and combinations thereof. Advantageously, the presence of a binder in the composition for 3D printing provides a very high structural integrity of the printed 3D body.

In one embodiment, said composition further comprises at least one additive selected from liquifying agents, plasticizers, defoamers, wetting agents, thickeners, humectants, fillers, and combinations thereof.

In one embodiment, said liquifying agents are selected from humic acids, peptization aids, fish oil such as menhaden fish oil, aryl sulfonic acids such as benzene sulfonic acids, fatty acids such as glyceryl trioleate, alkali salts such as sodium salts, alkali silicates e.g. sodium silicate, alkali phosphates, alkali carbonates, alkali salts of tannic acids, alkali salts of humic acids, alkali salts of polycarboxylic acids, alkali salts of phosphonic acids, and combinations thereof. Peptization aids may be, for example, citrate e.g. sodium citrate, nitrate, sodium phosphate, or a combination thereof. Advantageously, liquifying agents help in reducing the viscosity of the printing composition, e.g. the printing paste, making it easier to handle and print intricate designs.

In one embodiment, said plasticizers are selected from gelatin, dextrin, gum arabic, paraffin, butyl benzyl phthalate, butyl stearate, dibutyl phthalate, dimethyl phthalate, ethylene acrylic acid, ethylene vinyl acetate, ethyltoluene sulfonamide, glycerine, methyl abietate, methyl ethyl ketone, octyl phthalate, polyalcylene glycol such as polyethylene glycol, triethylene glycol hexoate, polyethylene copolymer, polypropylene copolymer, triethylene glycol, tri-n-butyl phosphate, vinyl acetate copolymer, phthalic acid ester, fish oil, and combinations thereof. Plasticizers provide flexibility to the composition and reduce the brittleness of the printed body, enhancing its mechanical properties and durability. For example, said plasticizers may be selected from butyl benzyl phthalate, butyl stearate dibutyl phthalate, dimethyl phthalate, ethylene acrylic acid, ethylene vinyl acetate, ethyltoluene sulfonamide, glycerine, octyl phthalate, polyethylene glycol, triethylene glycol hexoate, tri-n-butyl phosphate, vinyl acetate copolymer, and combinations thereof.

In one embodiment, said defoamers are selected from waxes. Defoamers such as waxes prevent the formation of bubbles during the printing process, ensuring a smooth and defect-free print surface.

In one embodiment, said wetting agents are selected from alkyl polyether alcohol, arylphenyl glycol, fish oils, octylphenoxyethanol, oleic acids, polyoxyethylene acetate, polyethylene ester, polyethylene glycol, polyethylene oxide, polysorbate, polyethylene glycol ethyl ether, stearic acid, stearic acid-oleic acid monoamides, and combinations thereof. Wetting agents may improve the spreadability of the composition on the substrate, ensuring uniform coverage and better adhesion.

In one embodiment, said thickeners are selected from sodium monofluorophosphate, paper clay, polyurethane, acrylate polymers, starch, guar gum, xanthan gum, alginate, carrageenan, pectin, tragacanth, polyacrylic acid, polyvinylpyrrolidone, silicon dioxide, methylcellulose, ethylcellulose, hydroxypropylcellulose, hydroxypropylmethylcellulose, carboxymethylcellulose, and combinations thereof. Thickeners adjust the viscosity of the printing composition, e.g. the printing paste, providing better control over the printing process and ensuring the paste stays in place during printing.

In one embodiment, said humectants are selected from polyethylene glycol alkyl ether. Humectants help retain moisture in the printing composition, preventing it from drying out too quickly and ensuring a consistent print quality.

In one embodiment, said fillers are selected from lactose, cellulose, starch, sucrose, paraffin, hard fat, polyethylene glycol, polyethylene oxide, and combinations thereof. Fillers can enhance the mechanical properties of the printed body, reduce shrinkage, and improve dimensional stability. They can also reduce the overall cost of the printing composition.

In a preferred embodiment, the composition comprises a liquifying agent, a plasticizer, and/or a thickener. The inventors have found that a composition comprising a liquifying agent, a plasticizer, and/or a thickener is highly effective for producing high-quality, reliable 3D printed bodies. In one embodiment, the liquifying agent is present in the composition in an amount in a range of from 0.0001 wt.% to 10 wt.%, preferably in an amount in a range of from 0.001 wt.% to 2% wt.%, more preferably in an amount in a range of from 0.001 wt.% to 0.5 wt.% such as in an amount in a range of from 0.001 wt.% to 0.05 wt.%. The specified range of amount of liquifying agent allows for precise control over the viscosity of the printing composition, ensuring it flows smoothly through the printing screen without clogging. In one embodiment, the plasticizer is present in the composition in an amount of < 95 wt.%, preferably in an amount in a range of from 10 wt.% to 65 wt.%. In one embodiment, the thickener is present in the composition in an amount in a range from 0.001 wt.% to 10 wt.%, preferably in an amount in a range from 0.01% wt.% to 3wt.%. The presence of a thickener in the specified amount allows for maintaining consistent layer deposition, thereby providing a very high structural integrity of the printed body.

Optionally, the composition comprises a defoamer, a wetting agent, or a combination thereof in an amount < 95 wt.%, preferably in an amount in a range of from 0.0001 wt.% to 5 wt.%. For example, the composition may comprise a defoamer in an amount in a range of from 0.0001 wt.% to 5 wt.%, a wetting agent in an amount in a range of from 0.0001 wt.% to 5 wt.%, and/or a combination of defoamer and wetting agent in an amount in a range of from 0.0001 wt.% to 5 wt.%. Defoamers, e.g. in the specified amount, can reduce the need for additional processing steps to remove foam, thereby increasing the efficiency of the printing process. The absence of foam allows for more precise layer deposition, improving the overall accuracy and detail of the print. By lowering the surface tension of the liquid components, wetting agents, e.g. wetting agents in the specified amount, facilitate smoother and more consistent layer deposition. In one embodiment, said composition further comprises potassium hydroxide. In one embodiment, the composition comprises a dye, preferably a biocompatible and/or non-toxic dye. The dye may be selected from Allura Red AC (E129), Aluminum (E173), Amaranth (E123), Ammonia Caramel (E150c), Ammonium Sulfite Caramel (E150d), Annatto, Bixin, Norbixin (E160b), Anthocyanins (E163), Azorubin (E122), Beet Red (E162), Beta-Apo-8'-Carotenal (E160e), Beta-Apo-8'-Carotinic Acid Ethyl Ester (E160f), Beta-Carotene (E160a(ii)), Brown FK (E154), Brown HT (E155), Brilliant Blue FCF (E133), Brilliant Black BN (E151), Calcium Carbonate (E170), Canthaxanthin (E161g), Quinoline Yellow (E104), Chlorophyll (E140(i)), Chlorophyllin (E140(ii)), Ponceau 4R (E124), Carmine (E120), Plain Caramel (E150a), Iron Oxides and Iron Hydroxides (E172), Erythrosine (E127), Sunset Yellow FCF (E110), Mixed Carotenes (E160a(i)), Gold (E175), Green S (E142), Indigotine (E132), Copper Complexes of Chlorophylls (E141(i)), Copper Complexes of Chlorophyllins (E141(ii)), Curcumin (E100), Litholrubine BK (E180), Lutein (E161b), Lycopene (E160d), Paprika Extract, Capsanthin, Capsorubin (E160c), Patent Blue V (E131), Vegetable Carbon (E153), Riboflavin (E101(i)), Riboflavin-5'-Phosphate (E101(ii)), Red 2G (E128), Silver (E174), Caustic Sulfite Caramel (E150b), Tartrazine (E102), and Titanium Dioxide (E171).

For example, the use of the composition of the invention may comprise screen printing a pharmaceutical dosage form, such as a tablet. For example, a filler in a composition for printing a pharmaceutical dosage form may be selected from lactose, cellulose, starches, sucrose, paraffin, hard fat, polyethylene glycol, polyethylene oxide, and combinations thereof. For example, a solvent in a composition for printing a pharmaceutical dosage form may be selected from water, ethanol, propan-2-ol, and combinations thereof. A composition for printing a pharmaceutical dosage form may further comprise an emulsifier, such as an emulsifier selected from: cetylstearyl alcohol, glycerol monostearate, lecithin, fatty acid esters of sorbitan, polysorbate, polyoxyethylene, polyoxyethylene fatty alcohol ether, and combinations thereof. For example, a wetting agent in a composition for printing a pharmaceutical dosage form may be selected from polyethylene glycol, polyethylene oxide, polysorbate, and combinations thereof. For example, a thickener in a composition for printing a pharmaceutical dosage form may be selected from starch, guar gum, xanthan gum, alginate, carrageenan, pectin, tragacanth, polyacrylic acid, polyvinylpyrrolidone, silicon dioxide, methylcellulose, ethylcellulose, hydroxypropylcellulose, hydroxypropylmethylcellulose, carboxymethylcellulose, and combinations thereof. In one embodiment, the composition further comprises, e.g. as a coating agent for a tablet, sucrose, gelatine, gelatine polysuccinate, polyacrylate, ethyl cellulose, methyl cellulose, or a combination thereof. In one embodiment, the composition further comprises, e.g. as a disintegrant for a tablet to be screen printed, starch, croscarmellose, sodium hydrogen carbonate, or a combination thereof. In one embodiment, the composition comprises an active agent selected from Gentamicin, Clindamycin, Vancomycin, Penicillin, weight loss agents, analeptics, analgesics, antirheumatics, antiallergics, antianemics, antiarrhythmics, antibiotics, anti-infectives, antidementia drugs, antidiabetics, antidotes, antiemetics, antiepileptics, antihemorrhagics, antihypertensives, antihypoglycemics, antihypotensives, anticoagulants, antifungals, antiparasitic agents, anti-inflammatory drugs, antitussives, arteriosclerosis treating drugs, balneotherapeutics, beta-blockers, calcium channel blockers, inhibitors of the renin-angiotensin system, bronchodilators, antiasthmatics, cholagogues, bile duct therapeutics, cholinergics, corticosteroids, dermatologicals, antiseptics, dietetics, diuretics, fibrinolytics, geriatrics, gout treating drugs, gynecologicals, hepatics, sedatives, pituitary and hypothalamic hormones, immunomodulators, cardiacs, caries and periodontosis treating drugs, coronary agents, laxatives, lipid-lowering agents, local anesthetics, gastrointestinal agents, migraine treating drugs, mineral supplements, mouth and throat therapeutics, muscle relaxants, anesthetics, neurotropic agents, ophthalmics, calcium metabolism regulators, otologics, Parkinson's treating drugs, psychotropics, rhinologics, thyroid therapeutics, immunoglobulins, sex hormones and their inhibitors, spasmolytics, platelet aggregation inhibitors, tuberculosis treating drugs, mood stabilizers, urologicals, vein therapeutics, vitamins, cytostatics, and combinations thereof. In one embodiment, the composition comprises an active agent selected from antibiotics and cytostatics.

In one embodiment, the composition comprises a label and/or a component providing, receiving, or processing a signal, such as a magnetic bead or an isotope label. In one embodiment, the composition comprises a label, such as a magnetic bead or an isotope label. For example, said label and said component providing, receiving, or processing a signal may be a label and a component providing, receiving, or processing a signal, respectively, for X-ray, Computed Tomography (CT) e.g. Computerized Axial Tomography (CAT), radiation therapy, magnetic fields, or mammography. For example, said label and/or component providing, receiving, or processing a signal may be selected from barium sulfate, tantalum, platinum, gold, platinum-iridium, tungsten, cesium-137, uranium-235, hydroxyapatite, tricalcium sulfate, stainless steel e.g. stainless steel particles, and combinations thereof. In one embodiment, a composition comprising barium sulfate further comprises any component selected from hypromellose, iron(II,III) oxides, polyurethane, thermoplastic polyurethane, polyethylene, titanium dioxide, and combinations thereof. For example, compositions for printing 3D bodies to be used as medical devices, e.g. implants, onplants, catheters, stents, or guiding instruments such as guidewires, may comprise said label and/or said component providing, receiving, or processing a signal. For example, hydroxyapatite and tricalcium sulfate may be used to provide the composition with piezoceramic properties. For example, stainless steel, particularly stainless steel particles, may be magnetically effective and may be used for placement or localization using a magnetic field.

In one embodiment, said first component is selected from metals, ceramic materials, glasses, and combinations thereof, and is present in said composition in an amount in a range of from 5 wt. % to 99.5 wt. %; or said first component is selected from plastics, organic materials, and combinations thereof, and is present in said composition in an amount in a range of from 5 wt. % to 100 wt. %. In one embodiment, said first component is selected from silicon carbide, aluminum, tungsten, poly(methyl methacrylate), talcum, stainless steel, and combinations thereof.

In one embodiment, the composition has a density in a range of from 0.5 g/cm³ to 20 g/cm³. The inventors have found that compositions with such a density allow for an efficient printing process and provide printed bodies with high structural integrity. In one embodiment, the composition has a viscosity of at least 3 dPa·s, preferably a viscosity in a range of from 5 to 30 dPa·s, as measured in accordance with standard DIN 53019. The appropriate viscosity ensures that the material flows smoothly through the printing screen without dripping or spreading excessively, thereby allowing for an accurate layer deposition.

For example, the viscosity may be measured in accordance with standard DIN 53019, particularly using viscometer VT-03/04 (model 04 from Rion Co. LTD, Tokyo Japan) at a temperature of 15-20°C for 20 min or using viscometer VT-03/04 (Bioblock Scientific, article code 33629) at a temperature of 25°C for 20 min; e.g. with a rotation speed of 62.5 t/min, and rotor type 3 having a diameter of 45.1 mm and a height of 47.0 mm or rotor type 1 having a diameter of 24.0 mm and a height of 53.0 mm. For example, the measuring cup may have a diameter of 52.6 mm and a height of 75.0 mm with 150 ml sample volume for the measurement.

In one embodiment, the composition comprises particles. The inventors have found that particles can improve the strength, durability, and overall mechanical properties of the printed body. Different types of particles (e.g., metal, ceramic, polymer) can be used to tailor the material properties to specific application needs. In a preferred embodiment, the particle sizes are < 1/3 of the mesh size of the screen mesh. In a preferred embodiment, said particles have a particle size in a range of from 1 nm to 25 µm, preferably of from 50 nm to 25 µm. The inventors have found that particles having such a particle size flow smoothly through the screen, reducing the risk of clogging and ensuring consistent material deposition.

In an even more preferred embodiment, said particles have a D₅₀ in a range of from 0.5 µm to 5 µm and a D₉₀ in a range of from 2.5 µm to 20 µm. Optionally, said particles have a D₁₀₀ in a range of from 25 µm to 35µm. Such a well-distributed particle size can improve the packing density of the material, leading to stronger and more durable printed bodies.

In one embodiment, said first component comprises or is a metal, preferably stainless steel, more preferably stainless steel particles; said second component comprises or is a dispersing agent, preferably selected from butanol, triethanolamine, and combinations thereof; and said third component comprises or is polyvinyl butyral; wherein, preferably, said composition further comprises a plasticizer selected from phthalic acid ester, polyethylene glycol, and a combination thereof;
wherein, optionally, said composition comprises
said first component, preferably stainless steel, in an amount in a range of from 40 wt.% to 65 wt.%, preferably in a range of from 50 wt.% to 56 wt.%, more preferably in a range of from 52 wt.% to 54 wt.%, even more preferably of about 53 wt.%,
said second component in an amount in a range of from 15 wt.% to 40 wt.%, preferably in a range of from 20 wt.% to 35 wt.%, more preferably in a range of from 25 wt.% to 30 wt.%, even more preferably of about 27.3 wt.%, for example butanol in an amount of about 26 wt.% and triethanolamine in an amount of about 1.3 wt.%,
said third component in an amount in a range of from 4 wt.% to 10 wt.%, preferably in a range of from 5 wt.% to 9 wt.%, more preferably in a range of from 6 wt.% to 8 wt.%, even more preferably of about 6.9 wt.%,
said plasticizer, if present, in an amount in a range of from 5 wt.% to 20 wt.%, preferably in a range of from 10 wt.% to 15 wt.%, more preferably in a range of from 12 wt.% to 13.5 wt.%, even more preferably of about 12.8 wt.%, for example phthalic acid ester in an amount of about 6 wt.% and polyethylene glycol in an amount of about 6.9 wt.%. The inventors have found that such a composition has the following advantages: the stainless steel, particularly stainless steel particles, provide(s) excellent mechanical strength and durability to the printed object; the dispersing agent helps in evenly distributing the metal particles within the composition, preventing agglomeration and ensuring a uniform print; and polyvinyl butyral provides excellent adhesion between the particles and the substrate. Polyvinyl butyral further imparts flexibility to the printed layers and reduces the risk of cracking.

In one embodiment, said first component is a ceramic material, preferably a silicon carbide ceramic, more preferably silicon carbide ceramic particles;
said second component is water;
said third component is dextrin;
wherein, preferably, said composition further comprises a plasticizer, preferably a fish oil;
wherein, optionally, said composition further comprises potassium hydroxide;
wherein, optionally, said composition comprises
   said first component in an amount in a range of from 40 wt.% to 80 wt.%, preferably in a range of from 50 wt.% to 70 wt.%, more preferably in a range of from 55 wt.% to 67 wt.%, even more preferably of about 58.3 wt.% or about 62.7 wt.%,
   said second component in an amount in a range of from 25 wt.% to 40 wt.%, preferably in a range of from 28 wt.% to 36 wt.%, more preferably in a range of from 30 wt.% to 35 wt.%, even more preferably of about 31.1 wt.% or about 33.5 wt.%,
   said third component in an amount in a range of from 0.01 wt.% to 3 wt.%, preferably in a range of from 0.1 wt.% to 1 wt.%, more preferably in a range of from 0.2 wt.% to 0.6 wt.%, even more preferably of about 0.4 wt.%,
   said plasticizer, if present, in an amount in a range of from 1 wt.% to 15 wt.%, preferably in a range of from 3 wt.% to 10 wt.%, more preferably in a range of from 6 wt.% to 8 wt.%, even more preferably of about 7 wt.%,
   said potassium hydroxide, if present, in an amount in a range of from 0.001 wt.% to 0.1 wt.%, preferably in a range of from 0.01 wt.% to 0.08 wt.%, more preferably in a
   range of from 0.02 wt.% to 0.06 wt.%, even more preferably of about 0.04 wt.%. The inventors have found that such a composition has the following advantages: a ceramic material such as silicon carbide, particularly silicon carbide ceramic particles, provide(s) excellent mechanical strength and wear resistance, making the printed bodies durable and suitable for high-stress applications. Furthermore, silicon carbide ceramics have high thermal conductivity and can withstand high temperatures, which is beneficial for applications requiring thermal stability. Said dextrin acts as a binder, helping to hold the ceramic material, such as the silicon carbide ceramic particles, together during the printing process. It also adds some flexibility to the composition, making it easier to handle and shape. The addition of water helps in achieving the right consistency for the printing process, ensuring smooth flow through the screen mesh and better layer adhesion. The plasticizer, such as fish oil, enhances the plasticity of the composition, making it easier to mold and shape during the printing process. Potassium hydroxide can improve the chemical resistance of the printed objects, making them more durable in harsh environments. These properties make the composition well-suited for producing high-quality, durable, and thermally stable 3D printed objects.

In one embodiment, said first component is a ceramic material, preferably a silicon carbide ceramic, more preferably silicon carbide ceramic particles;
said second component is an organic solvent, preferably ethanol, trichloroethene, or a combination thereof;
said third component is polyvinyl butyral;
wherein, preferably, said composition further comprises a plasticizer selected from fish oil, polyethylene glycol, and a combination thereof;
wherein, optionally, said composition comprises
   said first component in an amount in a range of from 20 wt.% to 60 wt.%, preferably in a range of from 30 wt.% to 50 wt.%, more preferably in a range of from 35 wt.% to 45 wt.%, even more preferably of about 39.5 wt.%,
   said second component in an amount in a range of from 30 wt.% to 60 wt.%, preferably in a range of from 40 wt.% to 55 wt.%, more preferably in a range of from 45 wt.% to 50 wt.%, even more preferably of about 47.5 wt.%,
   said third component in an amount in a range of from 0.01 wt.% to 3 wt.%, preferably in a range of from 0.1 wt.% to 2 wt.%, more preferably in a range of from 0.6 wt.% to 1 wt.%, even more preferably of about 0.8 wt.%,
   said plasticizer, if present, in an amount in a range of from 5 wt.% to 20 wt.%, preferably in a range of from 10 wt.% to 15 wt.%, more preferably in a range of from 11 wt.% to 13 wt.%, even more preferably of about 12.2 wt.%, for example fish oil in an
   amount of about 0.2 wt.% and polyethylene glycol in an amount of about 12 wt.%. The inventors have found that such a composition has the following advantages for 3D screen printing: a ceramic material such as silicon carbide, particularly silicon carbide ceramic particles, provide(s) excellent mechanical strength and wear resistance, making the printed bodies durable and suitable for high-stress applications. Organic solvents such as ethanol and trichloroethene help in achieving the right viscosity and flow properties for the printing process, ensuring smooth and consistent layer deposition. Polyvinyl butyral acts as a binder, providing good adhesion and flexibility. It helps in holding the ceramic material, e.g. ceramic particles, together and enhances the overall mechanical properties of the printed objects. The plasticizer, such as fish oil or polyethylene glycol, improves the plasticity of the composition, making it easier to shape during the printing process. The inventors have found that the combination of these components of the composition ensures better printability, with improved layer adhesion and reduced risk of defects during the printing process.

In one embodiment, said first component comprises a glass, silver, or a combination thereof, preferably comprises a glass and silver, more preferably a glass frit and silver;
said second component is a dispersing agent, optionally is paraffin;
said third component is paraffin;
wherein, optionally, said composition comprises
   said glass in an amount in a range of from 40 wt.% to 80 wt.%, preferably in a range of from 50 wt.% to 70 wt.%, more preferably in a range of from 60 wt.% to 65 wt.%, even more preferably of about 63.5 wt.%,
   said silver in an amount in a range of from 5 wt.% to 25 wt.%, preferably in a range of from 10 wt.% to 20 wt.%, more preferably in a range of from 14 wt.% to 17 wt.%, even more preferably of about 15.9 wt.%,
   said second component in an amount in a range of from 10 wt.% to 30 wt.%, preferably in a range of from 15 wt.% to 25 wt.%, more preferably in a range of from 18 wt.% to 21 wt.%, even more preferably of about 19.8 wt.%,
   said third component in an amount in a range of from 0.1 wt.% to 1.5 wt.%, preferably in a range of from 0.5 wt.% to 1 wt.%, more preferably in a range of from 0.7 wt.% to 0.9 wt.%, even more preferably of about 0.8 wt.%.

Such a composition offers several advantages for 3D screen printing: Glass frit can enhance the thermal stability of the printed objects, making them suitable for high-temperature applications. Furthermore, the inclusion of silver, or glass frit combined with silver, provides excellent electrical conductivity. This is particularly beneficial for applications requiring conductive pathways, such as in printed electronics. The dispersing agent, such as paraffin, helps in uniformly distributing the silver and glass within the composition. The uniform distribution allows for achieving consistent print quality and mechanical properties. Paraffin also acts as a binder, providing flexibility and workability to the composition. The combination of these components results in a composition with good rheological properties, ensuring smooth flow and reducing the risk of clogging or defects during the printing process.

In one embodiment, said first component comprises urethane acrylate oligomer, talcum, tri-acrylate oligomer, or a combination thereof;
said second component is a dispersing agent, preferably comprising acrylate monomers;
said third component comprises urethane acrylate, hydroxy ketone, benzophenone, or a combination thereof;
wherein, preferably, said composition further comprises silicone-acrylate, polyethersiloxane copolymer, or a combination thereof;
wherein, optionally, said composition comprises
   said urethane acrylate oligomer in an amount in a range of from 40 wt.% to 65 wt.%, preferably in a range of from 45 wt.% to 60 wt.%, more preferably in a range of from 52 wt.% to 55 wt.%, even more preferably of about 53.5 wt.%,
   said talcum in an amount in a range of from 0.01 wt.% to 0.4 wt.%, preferably in a range of from 0.15 wt.% to 0.3 wt.%, more preferably in a range of from 0.2 wt.% to 0.25 wt.%, even more preferably of about 0.22 wt.%,
   said tri-acrylate oligomer in an amount in a range of from 5 wt.% to 15 wt.%, preferably in a range of from 6 wt.% to 12 wt.%, more preferably in a range of from 8 wt.% to 10 wt.%, even more preferably of about 8.9 wt.%,
   said acrylate monomers in an amount in a range of from 25 wt.% to 45 wt.%, preferably in a range of from 30 wt.% to 40 wt.%, more preferably in a range of from 33 wt.% to 38 wt.%, even more preferably of about 35.7 wt.%,
   said urethane acrylate in an amount in a range of from 0.01 wt.% to 1 wt.%, preferably in a range of from 0.1 wt.% to 0.5 wt.%, more preferably in a range of from 0.2 wt.% to 0.4 wt.%, even more preferably of about 0.27 wt.%,
   said hydroxy ketone in an amount in a range of from 0.1 wt.% to 2 wt.%, preferably in a range of from 0.5 wt.% to 1.5 wt.%, more preferably in a range of from 0.8 wt.% to 1 wt.%, even more preferably of about 0.89 wt.%,
   said benzophenone in an amount in a range of from 0.01 wt.% to 2 wt.%, preferably in a range of from 0.1 wt.% to 1 wt.%, more preferably in a range of from 0.3 wt.% to 0.6 wt.%, even more preferably of about 0.45 wt.%,
   said silicone-acrylate, if present, in an amount in a range of from 0.001 wt.% to 0.1 wt.%, preferably in a range of from 0.01 wt.% to 0.08 wt.%, more preferably in a
   range of from 0.02 wt.% to 0.06 wt.%, even more preferably of about 0.04 wt.%. The inventors have found that such a composition is well-suited for producing high-quality, durable, and mechanically robust 3D printed objects with excellent surface finish and rapid curing capabilities. For example, urethane acrylate oligomers provide excellent mechanical strength and flexibility, making the printed objects durable and resilient. The inclusion of talcum can enhance the rigidity and dimensional stability of the printed body.

For example, acrylate monomer(s) may be selected from methylacrylate, ethylacrylate, n-butylacrylate, iso-butylacrylate, tert-butylacrylate, 2-ethylhexylacrylate, laurylacrylate, sterylacrylate, benzylacrylate, methylmethacrylate, ethylmethacrylate, isopropylmethacrylate, n-butylmethacrylate, iso-butylmethacrylate, tert-butylmethacrylate, neopentylmethacrylate, 2-ethylhexylmethacrylate, laurylmethacrylate, stearylmethacrylate, benzylmethacrylate, 2-hydroxyethylacrylate, 2-hydroxypropylacrylate, 2-hydroxyethylmethacrylate, 2-hydroxypropylmethacrylate, butanediol-1,4-monoacrylate, acrylic acid, methacrylic acid, n,n-dimethylaminoethylacrylate, n,n-dimethylaminoethylmethacrylate, acrylamide, methacrylamide, glycidylmethacrylate, styrene, acrylonitrile, p-vinyltoluene, alpha-methylstyrene, n-vinylpyrrolidone, n-vinylcaprolacta, and combinations thereof.

In one embodiment, said first component comprises collagen such as collagen type I fibers, collagen hydrolysate, or a combination thereof;
said second component comprises water;
said third component comprises cellulose acetate;
wherein, preferably, said composition further comprises cells, a cell product such as a growth factor, an active agent, or a combination thereof;
wherein, optionally, said composition comprises
   said collagen in an amount in a range of from 35 wt.% to 65 wt.%, preferably in a range of from 40 wt.% to 55 wt.%, more preferably in a range of from 45 wt.% to 50 wt.%, even more preferably of about 47.4 wt.%,
   said collagen hydrolysate in an amount in a range of from 10 wt.% to 35 wt.%, preferably in a range of from 20 wt.% to 28 wt.%, more preferably in a range of from 22 wt.% to 25 wt.%, even more preferably of about 23.7 wt.%,
   said water in an amount in a range of from 10 wt.% to 40 wt.%, preferably in a range of from 20 wt.% to 35 wt.%, more preferably in a range of from 27 wt.% to 30 wt.%, even more preferably of about 28.5 wt.%,
   said cellulose acetate in an amount in a range of from 0.01 wt.% to 1 wt.%, preferably in a range of from 0.1 wt.% to 0.5 wt.%, more preferably in a range of from 0.2 wt.% to 0.4 wt.%, even more preferably of about 0.28 wt.%,
   said growth factors, if present, in an amount in a range of from 0.001 wt.% to 0.1 wt.%, preferably in a range of from 0.01 wt.% to 0.08 wt.%, more preferably in a range of from 0.03 wt.% to 0.07 wt.%, even more preferably of about 0.05 wt.%,
   said cells, if present, in an amount in a range of from 0.01 wt.% to 1 wt.%, preferably in a range of from 0.05 wt.% to 0.5 wt.%, more preferably in a range of from 0.07 wt.% to 0.15 wt.%, even more preferably of about 0.11 wt.%.

The inventors have found that such a composition has the following advantages for 3D screen printing: Collagen, especially type I fibers and collagen hydrolysate, is highly biocompatible, making it ideal for biomedical applications such as tissue engineering and regenerative medicine. Furthermore, collagen provides excellent mechanical strength and flexibility, thereby being highly useful for creating durable and resilient 3D printed structures. Water acts as a solvent and helps in the hydration and gelation of collagen, facilitating the formation of a stable and uniform printing material. Cellulose acetate improves the printability of the composition by providing better flow properties and layer adhesion. It also contributes to the mechanical strength and stability of the printed objects. These properties make the composition well-suited for producing high-quality, biocompatible, and mechanically robust 3D printed objects, particularly for biomedical and environmental applications.

In a further aspect, the present invention relates to a composition for three-dimensional screen printing, preferably rotary screen printing, of a three-dimensional body, comprising
a first component selected from metals, ceramic materials, glasses, plastics, organic materials, and combinations thereof;
a second component selected from solvents and dispersing agents; and
a third component selected from binders;
wherein
a) said first component is a metal, preferably stainless steel, more preferably stainless steel particles;
   wherein said second component is a dispersing agent, preferably selected from butanol, triethanolamine, and combinations thereof;
   wherein said third component is polyvinyl butyral;
   wherein, preferably, said composition further comprises a plasticizer selected from phthalic acid ester, polyethylene glycol, and a combination thereof;
   wherein, optionally, said composition comprises
      said first component, preferably stainless steel, in an amount in a range of from 40 wt.% to 65 wt.%, preferably in a range of from 50 wt.% to 56 wt.%, more preferably in a range of from 52 wt.% to 54 wt.%, even more preferably of about 53 wt.%,
      said second component in an amount in a range of from 15 wt.% to 40 wt.%, preferably in a range of from 20 wt.% to 35 wt.%, more preferably in a range of from 25 wt.% to 30 wt.%, even more preferably of about 27.3 wt.%, for example butanol in an amount of about 26 wt.% and triethanolamine in an amount of about 1.3 wt.%,
      said third component in an amount in a range of from 4 wt.% to 10 wt.%, preferably in a range of from 5 wt.% to 9 wt.%, more preferably in a range of from 6 wt.% to 8 wt.%, even more preferably of about 6.9 wt.%,
      said plasticizer, if present, in an amount in a range of from 5 wt.% to 20 wt.%, preferably in a range of from 10 wt.% to 15 wt.%, more preferably in a range of from 12 wt.% to 13.5 wt.%, even more preferably of about 12.8 wt.%, for example phthalic acid ester in an amount of about 6 wt.% and polyethylene glycol in an amount of about 6.9 wt.%;
   or wherein
b) said first component is a ceramic material, preferably a silicon carbide ceramic, more preferably silicon carbide ceramic particles;
   wherein said second component is water;
   wherein said third component is dextrin;
   wherein, preferably, said composition further comprises a plasticizer, preferably a fish oil;
   wherein, optionally, said composition further comprises potassium hydroxide;
   wherein, optionally, said composition comprises
      said first component in an amount in a range of from 40 wt.% to 80 wt.%, preferably in a range of from 50 wt.% to 70 wt.%, more preferably in a range of from 55 wt.% to 67 wt.%, even more preferably of about 58.3 wt.% or about 62.7 wt.%,
      said second component in an amount in a range of from 25 wt.% to 40 wt.%, preferably in a range of from 28 wt.% to 36 wt.%, more preferably in a range of from 30 wt.% to 35 wt.%, even more preferably of about 31.1 wt.% or about 33.5 wt.%,
      said third component in an amount in a range of from 0.01 wt.% to 3 wt.%, preferably in a range of from 0.1 wt.% to 1 wt.%, more preferably in a range of from 0.2 wt.% to 0.6 wt.%, even more preferably of about 0.4 wt.%,
      said plasticizer, if present, in an amount in a range of from 1 wt.% to 15 wt.%, preferably in a range of from 3 wt.% to 10 wt.%, more preferably in a range of from 6 wt.% to 8 wt.%, even more preferably of about 7 wt.%,
      said potassium hydroxide, if present, in an amount in a range of from 0.001 wt.% to 0.1 wt.%, preferably in a range of from 0.01 wt.% to 0.08 wt.%, more preferably in a range of from 0.02 wt.% to 0.06 wt.%, even more preferably of about 0.04 wt.%;
   or wherein
c) said first component is a ceramic material, preferably a silicon carbide ceramic, more preferably silicon carbide ceramic particles;
   wherein said second component is an organic solvent, preferably ethanol, trichloroethene, or a combination thereof;
   wherein said third component is polyvinyl butyral;
   wherein, preferably, said composition further comprises a plasticizer selected from fish oil, polyethylene glycol, and a combination thereof;
   wherein, optionally, said composition comprises
      said first component in an amount in a range of from 20 wt.% to 60 wt.%, preferably in a range of from 30 wt.% to 50 wt.%, more preferably in a range of from 35 wt.% to 45 wt.%, even more preferably of about 39.5 wt.%,
      said second component in an amount in a range of from 30 wt.% to 60 wt.%, preferably in a range of from 40 wt.% to 55 wt.%, more preferably in a range of from 45 wt.% to 50 wt.%, even more preferably of about 47.5 wt.%,
      said third component in an amount in a range of from 0.01 wt.% to 3 wt.%, preferably in a range of from 0.1 wt.% to 2 wt.%, more preferably in a range of from 0.6 wt.% to 1 wt.%, even more preferably of about 0.8 wt.%,
      said plasticizer, if present, in an amount in a range of from 5 wt.% to 20 wt.%, preferably in a range of from 10 wt.% to 15 wt.%, more preferably in a range of from 11 wt.% to 13 wt.%, even more preferably of about 12.2 wt.%, for example fish oil in an amount of about 0.2 wt.% and polyethylene glycol in an amount of about 12 wt.%;
   or wherein
d) said first component comprises a glass, silver, or a combination thereof, preferably comprises a glass and silver, more preferably a glass frit and silver;
   wherein said second component is a dispersing agent, optionally is paraffin;
   wherein said third component is paraffin;
   wherein, optionally, said composition comprises
      said glass in an amount in a range of from 40 wt.% to 80 wt.%, preferably in a range of from 50 wt.% to 70 wt.%, more preferably in a range of from 60 wt.% to 65 wt.%, even more preferably of about 63.5 wt.%,
      said silver in an amount in a range of from 5 wt.% to 25 wt.%, preferably in a range of from 10 wt.% to 20 wt.%, more preferably in a range of from 14 wt.% to 17 wt.%, even more preferably of about 15.9 wt.%,
      said second component in an amount in a range of from 10 wt.% to 30 wt.%, preferably in a range of from 15 wt.% to 25 wt.%, more preferably in a range of from 18 wt.% to 21 wt.%, even more preferably of about 19.8 wt.%, said third component in an amount in a range of from 0.1 wt.% to 1.5 wt.%, preferably in a range of from 0.5 wt.% to 1 wt.%, more preferably in a range of from 0.7 wt.% to 0.9 wt.%, even more preferably of about 0.8 wt.%;
   or wherein
e) said first component comprises urethane acrylate oligomer, talcum, tri-acrylate
   oligomer, or a combination thereof;
   wherein said second component is a dispersing agent, preferably comprising acrylate monomers;
   wherein said third component comprises urethane acrylate, hydroxy ketone, benzophenone, or a combination thereof;
   wherein, preferably, said composition further comprises silicone-acrylate, polyethersiloxane copolymer, or a combination thereof;
   wherein, optionally, said composition comprises
      said urethane acrylate oligomer in an amount in a range of from 40 wt.% to 65 wt.%, preferably in a range of from 45 wt.% to 60 wt.%, more preferably in a range of from 52 wt.% to 55 wt.%, even more preferably of about 53.5 wt.%, said talcum in an amount in a range of from 0.01 wt.% to 0.4 wt.%, preferably in a range of from 0.15 wt.% to 0.3 wt.%, more preferably in a range of from 0.2 wt.% to 0.25 wt.%, even more preferably of about 0.22 wt.%,
      said tri-acrylate oligomer in an amount in a range of from 5 wt.% to 15 wt.%, preferably in a range of from 6 wt.% to 12 wt.%, more preferably in a range of from 8 wt.% to 10 wt.%, even more preferably of about 8.9 wt.%,
      said acrylate monomers in an amount in a range of from 25 wt.% to 45 wt.%, preferably in a range of from 30 wt.% to 40 wt.%, more preferably in a range of from 33 wt.% to 38 wt.%, even more preferably of about 35.7 wt.%, said urethane acrylate in an amount in a range of from 0.01 wt.% to 1 wt.%, preferably in a range of from 0.1 wt.% to 0.5 wt.%, more preferably in a range of from 0.2 wt.% to 0.4 wt.%, even more preferably of about 0.27 wt.%,
      said hydroxy ketone in an amount in a range of from 0.1 wt.% to 2 wt.%, preferably in a range of from 0.5 wt.% to 1.5 wt.%, more preferably in a range of from 0.8 wt.% to 1 wt.%, even more preferably of about 0.89 wt.%, said benzophenone in an amount in a range of from 0.01 wt.% to 2 wt.%, preferably in a range of from 0.1 wt.% to 1 wt.%, more preferably in a range of from 0.3 wt.% to 0.6 wt.%, even more preferably of about 0.45 wt.%, said silicone-acrylate, if present, in an amount in a range of from 0.001 wt.% to 0.1 wt.%, preferably in a range of from 0.01 wt.% to 0.08 wt.%, more preferably in a range of from 0.02 wt.% to 0.06 wt.%, even more preferably of about 0.04 wt.%;
   or wherein
f) said first component comprises collagen such as collagen type I fibers, collagen hydrolysate, or a combination thereof;
   wherein said second component comprises water;
   wherein said third component comprises cellulose acetate;
   wherein, preferably, said composition further comprises cells, a cell product such as a growth factor, an active agent, or a combination thereof;
   wherein, optionally, said composition comprises
      said collagen in an amount in a range of from 35 wt.% to 65 wt.%, preferably in a range of from 40 wt.% to 55 wt.%, more preferably in a range of from 45 wt.% to 50 wt.%, even more preferably of about 47.4 wt.%,
      said collagen hydrolysate in an amount in a range of from 10 wt.% to 35 wt.%, preferably in a range of from 20 wt.% to 28 wt.%, more preferably in a range of from 22 wt.% to 25 wt.%, even more preferably of about 23.7 wt.%, said water in an amount in a range of from 10 wt.% to 40 wt.%, preferably in a range of from 20 wt.% to 35 wt.%, more preferably in a range of from 27 wt.% to 30 wt.%, even more preferably of about 28.5 wt.%,
      said cellulose acetate in an amount in a range of from 0.01 wt.% to 1 wt.%, preferably in a range of from 0.1 wt.% to 0.5 wt.%, more preferably in a range of from 0.2 wt.% to 0.4 wt.%, even more preferably of about 0.28 wt.%, said growth factors, if present, in an amount in a range of from 0.001 wt.% to 0.1 wt.%, preferably in a range of from 0.01 wt.% to 0.08 wt.%, more
      preferably in a range of from 0.03 wt.% to 0.07 wt.%, even more preferably of about 0.05 wt.%,
      said cells, if present, in an amount in a range of from 0.01 wt.% to 1 wt.%, preferably in a range of from 0.05 wt.% to 0.5 wt.%, more preferably in a range of from 0.07 wt.% to 0.15 wt.%, even more preferably of about 0.11 wt.%.

The inventors have found that the specified compositions are well-suited for producing high-quality and mechanically robust 3D screen printed bodies.

In one embodiment, said composition further comprises at least one additive selected from liquifying agents, plasticizers, defoamers, wetting agents, thickeners, humectants, fillers, and combinations thereof. In one embodiment, the composition has a density in a range of from 0.5 g/cm³ to 20 g/cm³. The inventors have found that compositions with such a density allow for an efficient printing process and provide printed bodies with high structural integrity. In one embodiment, the composition has a viscosity of at least 3 dPa·s, preferably a viscosity in a range of from 5 to 30 dPa·s, as measured in accordance with standard DIN 53019. The appropriate viscosity ensures that the material flows smoothly through the printing screen without dripping or spreading excessively, thereby allowing for an accurate layer deposition. In one embodiment, the composition comprises particles. The inventors have found that particles can improve the strength, durability, and overall mechanical properties of the printed body. In a preferred embodiment, said particles have a particle size in a range of from 1 nm to 25 µm, preferably of from 50 nm to 25 µm. In an even more preferred embodiment, said particles have a D50 in a range of from 0.5 µm to 5 µm and a D90 in a range of from 2.5 µm to 20 µm. Optionally, said particles have a D100 in a range of from 25 µm to 35µm.

In this aspect relating to the composition of the invention, said first component, said second component, said third component, said metals, said ceramic materials, said glasses, said plastics, said organic materials, said solvents, said dispersing agents, said binders, said amounts, said liquifying agents, said plasticizers, said defoamers, said wetting agents, said thickeners, said humectants, and said fillers are as defined herein. All embodiments described herein with respect to the use of the invention, particularly embodiments defining the composition to be used according to the use of the invention, are meant to be understood as also relating to the composition of the invention.

In a further aspect, the present invention relates to a method of three-dimensional screen printing a three-dimensional body, comprising
i) applying a first layer of a composition to a support;
ii) preferably, applying one or more, preferably a plurality of further layers of said composition to said first layer;
wherein, optionally, said method comprises a step of contacting said first layer and optionally, if present, said one or more, preferably a plurality of further layers, with any of light, laser, microwaves, x-rays, heat, cold, humidity, air, vacuum, a cross-linking agent, or a combination thereof such as a combination of cold and vacuum; wherein, preferably, said method comprises a step of drying said first layer and optionally said one or more, preferably a plurality of further layers;
wherein said composition is a composition as defined herein, and/or is a composition comprising
a first component selected from metals, ceramic materials, glasses, plastics, organic materials, and combinations thereof; wherein, preferably, said first component is present in said composition in an amount of at least 5 wt. %;
a second component selected from solvents and dispersing agents; wherein, preferably, said second component is present in said composition in an amount in a range of from 0.5 wt. % to 95 wt. %, preferably in a range of from 20 wt. % to 65 wt. %;
a third component selected from binders; wherein, preferably, said third component is present in said composition in an amount in a range of from 0.0001 wt. % to 95 wt. %, preferably in a range of from 0.0001 wt. % to 10 wt. %, more preferably in a range of from 0.001 wt. % to 5 wt. %, even more preferably in a range of from 0.1 wt. % to 1.5 wt. %. For example, the term "cold" may refer to a temperature of 10°C or less, preferably a temperature of 0°C or less, such as a temperature of -1°C or less. For example, the term "heat" may refer to a temperature of 25°C or more, preferably a temperature of 35°C or more, such as a temperature of 50°C or more.

In one embodiment, said composition comprises at least one additive selected from liquifying agents, plasticizers, defoamers, wetting agents, thickeners, humectants, fillers, and combinations thereof. In one embodiment, said composition is a solution or suspension; wherein, preferably, said composition is a paste. In one embodiment, the composition has a density in a range of from 0.5 g/cm³ to 20 g/cm³; and/or the composition has a viscosity of at least 3 dPa·s, preferably a viscosity in a range of from 5 to 30 dPa·s, as measured in accordance with standard DIN 53019. In one embodiment, the composition comprises particles;
wherein, preferably, said particles have a particle size in a range of from 1 nm to 25 µm, preferably of from 50 nm to 25 µm; wherein, more preferably, said particles have a D₅₀ in a range of from 0.5 µm to 5 µm and a D₉₀ in a range of from 2.5 µm to 20 µm; wherein, optionally, said particles have a D₁₀₀ in a range of from 25 µm to 35 µm.

In one embodiment, the method of three-dimensional screen printing a three-dimensional body comprises
i) applying a first layer of a composition to a support;
ii) curing said first layer of step i),
iii) applying one or more, preferably a plurality of further layers of said composition to said first layer;
iv) curing said one or more, preferably a plurality of further layers.

In one embodiment, said method comprises a step of debinding. Debinding in screen printing typically refers to the process of removing binding agents used in the production of printed bodies, especially in applications involving metal and/or ceramic materials. For example, debinding may be carried out physically, e.g. thermally, or chemically.

In this aspect relating to the method of the invention, said composition, said first component, said second component, said third component, said metals, said ceramic materials, said glasses, said plastics, said organic materials, said solvents, said dispersing agents, said binders, said amounts, said liquifying agents, said plasticizers, said defoamers, said wetting agents, said thickeners, said humectants, and said fillers are as defined herein. All embodiments described herein with respect to the use of the invention, particularly embodiments defining the composition to be used according to the use of the invention, and all embodiments described herein with respect to the composition of the invention are meant to be understood as also relating to the method of the invention.

The terms "of the [present] invention", "in accordance with the invention", "according to the invention" and the like, as used herein are intended to refer to all aspects and embodiments of the invention described and/or claimed herein. As used herein, the term "comprising" is to be construed as encompassing both "including" and "consisting of", both meanings being specifically intended, and hence individually disclosed embodiments in accordance with the present invention. Where used herein, "and/or" is to be taken as specific disclosure of each of the two specified features or components with or without the other. For example, "A and/or B" is to be taken as specific disclosure of each of (i) A, (ii) B and (iii) A and B, just as if each is set out individually herein. In the context of the present invention, the terms "about" and "approximately" denote an interval of accuracy that the person skilled in the art will understand to still ensure the technical effect of the feature in question. The term typically indicates deviation from the indicated numerical value by ±20%, ±15%, ±10%, and for example ±5%. As will be appreciated by the person of ordinary skill, the specific such deviation for a numerical value for a given technical effect will depend on the nature of the technical effect. For example, a natural or biological technical effect may generally have a larger such deviation than one for a man-made or engineering technical effect. Where an indefinite or definite article is used when referring to a singular noun, e.g. "a", "an" or "the", this includes a plural of that noun unless something else is specifically stated. The term "about", as used herein in the context of numbers or data, intends to include deviations (±) which usually are to be considered in the respective technical field.

### EXAMPLES

### Example 1: metal composition

An example of a composition for three-dimensional screen printing comprising a metal as a first component is a composition comprising stainless steel powder 1.4401 (X5CrNiMo17-12-2) with a D90 grain size of 2.5 µm, also known as 316L or surgical steel, as a matrix [A]. The matrix was mixed and homogenized with the dispersants 1 and 2 [B], butanol and triethanolamine, and binder 1 [C] in the form of polyvinyl butyral, as well as the plasticizers [E], particularly phthalic acid ester and polyethylene glycol. After a degassing phase under vacuum, the composition was 3D screen printed to form a 3D body. After the print of the first layer, radiant energy was applied in such a way that the printed layer was irradiated with thermal wave radiation with an energy density of 0.8 W/cm² over a period of 12 seconds. Using this composition, the organic solvent can also be substituted with water. After all layers were printed, the body was subjected to classic metallurgical debinding and subsequent sintering at around 1300 °C. The additives present in the unfired body were oxidized without coking occurring.

| Target product Stainless steel body | component | Quantity | Source |
|---|---|---|---|
| Matrix 1 [A] | Stainless steel 316L | 1000 g | Powder metallurgy |
| Dispersing agent 1 [B] | Butanol | 490 g | Synthesis |
| Dispersing agent 2 [B] | Triethanolamine | 25 g | Synthesis |
| Binder 1 [C] | Polyvinyl butyral | 130 g | Chemistry |
| Binder 2a [D] | Radiant energy | 12 seconds 0.8 W/cm² | IR emitter |
| Plasticizer 1 [E] | Phthalic acid ester | 112 g | Chemistry |

| optional | | | |
|---|---|---|---|
| Plasticizer 2[E] | Polyethylene glycol | 130 g | Chemistry |

The use of the metal composition for 3D screen printing provided a highly stable 3D printed stainless steel body.

### Example 2: ceramic composition with water

The herein described silicon carbide ceramic with approximately 50 % open continuous porosity with pore widths between 3 µm and 7 µm provided a 3D printed body, particularly a porous, filterable and thermal shock-resistant high-performance ceramic that can be used in both automotive and technical applications. Silicon carbide powders were mixed, particularly a silicon carbide powder with grain size F1000 split grain shape, a silicon carbide powder with grain size F800 split grain shape, and a silicon carbide powder with grain size F600 rounded grain shape, with a temporary carbon carrier (said carbon was consumed during the final thermal sintering) and with water. This mixture was then mixed with fish oil and dextrin. After printing a layer, the printed layer was fogged with a mist of a potassium hydroxide solution and then irradiated with infrared radiation up to a maximum temperature of 67°C. After a short cooling phase to below 40 °C, the next layer was printed using the composition described herein. The use of the ceramic composition for 3D screen printing provided a highly stable 3D printed body.

| Target product silicon carbide ceramics | component | Quantity | Source |
|---|---|---|---|
| Matrix 1 [A] | Silicon carbide | 300 g | Norway |
| Matrix 2 [A] | Silicon carbide | 800 g | Norway |
| Matrix 3 [A] | Silicon carbide | 400 g | Mexico |
| Matrix 4 [A] | Carbon (graphite) | 80 g | Synthesis |
| Dispersing agent [B] | Water | 800 g | Synthesis |
| Binder 1 [C] | Dextrin | 10 g | Chemistry |
| Binder 2a [D] | Radiant energy | 20 sec. | IR emitter |
| Binder 2b [D] | Potassium hydroxide | 1 g | Chemistry |

| optional | | | |
|---|---|---|---|
| Plasticizer [E] | Fish oil | 180 | Chemistry |

Example 3: ceramic composition with an organic solvent and silicon carbide A mixture of silicon carbide comprising 60 % F800, 30 % F1000 and 10 % F600 (grain size specification according to FEPA - Fédération Européenne des Fabricants de Produits Abrasifs) was mixed with 47.5 %wt. solvent comprising 75 % ethanol and 25 % trichloroethene, and with 0.18 %wt. fish oil, 0.8 %wt. polyvinyl butyral, and 12 %wt. polyethylene glycol under constant stirring during the addition. After a resting time of 2 hours and after further mixing, the composition was used directly or after cooled storage in the three-dimensional screen printing process. In some batches, potassium hydroxide was added as described in the previous example. The use of the ceramic composition for 3D screen printing provided a highly stable 3D printed body.

### Example 4: glass composition

In contrast to conventional applications of glass in structured form, in which the glass is always processed as a paste, three-dimensional screen printing makes it possible to build up glass three-dimensionally as a structured body and only then melt it, e.g. for solar cells. Silver was mixed with glass frit and paraffin. After printing at a composition temperature of more than 75 °C using a hot printing screen, the printed layer was cooled with a supercooled air flow for 10 seconds to a temperature below 30 °C. The solidification of paraffin was sufficient as a stabilizing bond for the subsequent printing. The printed body was debinded with coking and degassing and then partially melted in a special firing process to create a structured conductive glass body. The use of the glass composition for 3D screen printing provided an electrically conductive 3D printed body.

| Target product electrically conductive glass | component | Quantity | Source |
|---|---|---|---|
| Matrix 1 [A] | Glass frit | 800 g | Chemistry |
| Matrix 2 [A] | Silver - fine-grained | 200 g | Scabbard |
| Dispersing agent [B] | paraffin | 250 g | Chemistry |
| Binder 1 [C] | paraffin | 10 g | Chemistry |
| Binder 2a [D] | Cold ventilation 5 °C | 10 sec. | Climate generator |

### Example 5: plastic composition

A mixture, comprising the specified matrix components 1-3 [A] with mass fractions of 20% to 70%, the specified dispersing agents [B] with mass fractions between 10% and 60%, the specified binders 1 [C] with mass fractions between 0.5% and 10% and optionally additives, was contacted with UV radiation for an exposure time of 15 seconds. If there was transparency in the finished printed body, post-curing was carried out with thermal support or additional UV radiation. The use of the plastic composition for 3D screen printing provided a versatile 3D printed body.

| Target product electrical plastic | component | Quantity | Source |
|---|---|---|---|
| Matrix 1 [A] | Urethane acrylate oligomer | 600 g | Chemistry |
| Matrix 2 [A] | Talcum powder | 2,5 g | Chemistry |
| Matrix 3 [A] | Tri-acrylate oligomer | 100 g | Chemistry |
| Dispersing agent [B] | Mono-bifunctional acrylate monomer | 400 g | Chemistry |
| Binder 1 [C] | Urethane acrylate | 3 g | Chemistry |
| Binder 1 [C] | Hydroxyketone | 10 g | Chemistry |
| Binder 1 [C] | Benzophenone | 5 g | Chemistry |
| Binder 2a [D] | UV radiation | 15 sec. | UV-A,B,C lamps |
| Condenser [F] | Silicone-acrylate | 0,5 g | Chemistry |
| Defoamer [H] | Polyethersiloxane copolymers | Tracks | Chemistry |

### Example 6: organic material composition

A special application of the three-dimensional screen printing composition is the use of the composition for the production of an implant material by 3D screen printing, e.g. a wound dressing, such as for burn wounds. Collagen type I fibers with a fiber length of 10 µm were homogeneously mixed with crystalline collagen hydrolysate dissolved in sterile distilled water and cellulose acetate. Growth factors were added to the formulation. The print structure was a honeycomb pattern with web widths of 150 µm and clear internal honeycomb spacing of 50 µm to 500 µm. After printing the first layer of said composition, the printed layer was irradiated with a light emitter with a wavelength of 3-4 µm over a period of 5 seconds at a power density of 0.5 Watt/cm². The heat generated as a secondary effect of the radiation was minimized by active air cooling and did not exceed a temperature of 40°C. The next layer was printed and the process was repeated until the desired body height was reached. In some batches, the printed layer was freeze-dried after the irradiation and before the next print layer was applied. After completion of the printing process, the implant was freeze-dried and sterilized by gamma rays. In some batches, a vital cell substance was added under sterile conditions.

| Target product Implant material | component | Quantity | Source |
|---|---|---|---|
| Matrix 1 [A] | Collagen I fibers | 500 g | Beef |
| Matrix 2 [A] | Collagen hydrolysate | 250 g | Beef |
| Dispersing agent [B] | Water | 200 g | Binder 1 [C] |
| Dispersing agent [B] | Water | 100 g | Matrix 2 [A] |
| Binder 1 [C] | Cellulose acetate | 3 g | Synthesis |
| Binder 2a [D] | Radiant energy | 5 sec. | Quartz emitter |

| optional | | | |
|---|---|---|---|
| Binder 2a [D] | Cold / Vacuum | -40 °C | Freezer |
| Special additive [J] | Growth factor | 0,5 g | Cell biology |
| Special additive [J] | vital cells | 1,2 g | homologous |

Using the specified composition for 3D screen printing, a 3D body suitable as implant material was successfully produced.

The features of the present invention disclosed in the specification, and/or the claims, may both separately and in any combination thereof, be material for realizing the invention in various forms thereof.

## Claims

1. Use of a composition for three-dimensional screen printing, preferably rotary screen printing, of a three-dimensional body, wherein said composition comprises:
a first component selected from metals, ceramic materials, glasses, plastics, organic materials, and combinations thereof; wherein, preferably, said first component is present in said composition in an amount of at least 5 wt. %;
a second component selected from solvents and dispersing agents; wherein, preferably, said second component is present in said composition in an amount in a range of from 0.5 wt. % to 95 wt. %, preferably in a range of from 20 wt. % to 65 wt. %;
a third component selected from binders; wherein, preferably, said third component is present in said composition in an amount in a range of from 0.0001 wt. % to 95 wt. %, preferably in a range of from 0.0001 wt. % to 10 wt. %, more preferably in a range of from 0.001 wt. % to 5 wt. %, even more preferably in a range of from 0.1 wt. % to 1.5 wt. %;
wherein, preferably, said composition is a solution or suspension, preferably a paste;
wherein, optionally, said three-dimensional screen printing comprises separating the three-dimensional body from a screen printing support.

2. Use of a composition according to claim 1,
wherein said metals are selected from lithium, titanium, aluminum, iron, copper, molybdenum, palladium, tungsten, gold, silver, stainless steel, and combinations thereof;
wherein said ceramic materials are selected from silicon carbide, boron carbide, titanium carbide, cordierite, aluminum oxide, zirconium dioxide, silicon nitride, aluminum nitride, boron nitride, titanium nitride, barium titanate, magnesium titanate, calcium titanate, strontium titanate, bismuth titanate, titanium dioxide, magnesium oxide, beryllium oxide, barium oxide, ferrite, porcelain, steatite, forsterite, stoneware, earthenware, glass-ceramics, calcium phosphate ceramics, talcum, and combinations thereof;
wherein said glasses are selected from silicate glasses, such as soda-lime glass, borosilicate glasses, and aluminosilicate glasses, lead glasses, phosphate glasses, halide glasses, chalcogenide glasses, and combinations thereof;
wherein said plastics are selected from urethane acrylate oligomer, tri-acrylate oligomer, acrylic ester styrene acrylonitrile, acrylonitrile butadiene styrene, acrylonitrile-methyl methacrylate copolymer, acrylonitrile-butadiene-acrylate copolymer, acrylonitrile-chlorinated polyethylene-styrene copolymer, butadiene rubber, butyl rubber, casein plastics, cellulose acetate, cellulose hydrate, cellulose nitrate, chitin, chitosan, chlorobutadiene rubber, cyclo-olefin copolymers, epoxy resin, ethylene-ethyl acrylate copolymer, ethylene-propylene copolymer, ethylene-propylene-diene rubber, ethylene vinyl acetate, fluororubber, liquid crystal polymers, melamine-phenol formaldehyde, methyl acrylate-butadiene-styrene copolymer, perfluoroalkoxy alkane, phenol-formaldehyde resin, polyacrylonitrile, polyamide, polybutylene succinate, polybutylene terephthalate, polycaprolactone, polycarbonate, polychlorotrifluoroethylene, polyester, polyester-urethane rubber, polyesteramide,
polyether block amide, polyetherimide, polyether ketone, polyether sulfone, polyethylene, polyethylene terephthalate, polyhydroxyalkanoates, polyhydroxybutyrate, polyimide, polyisobutylene, polylactic acid, polymethacrylimethylimide, poly(methyl methacrylate), polymethylpentene, polyoxymethylene, polyphenylene ether, polyphenylene sulfide, polyphthalamide, polypropylene, polypyrrole, polystyrene, polysulfone, polytetrafluoroethylene, polytrimethylene terephthalate, polyurethane, polyvinyl acetate, polyvinyl butyral, polyvinyl chloride, polyvinylidene fluoride, polyvinylpyrrolidone, silicone rubber, styrene-acrylonitrile copolymer, styrene-butadiene rubber, styrene-butadiene-styrene, thermoplastic starch, vinyl chloride-ethylene-methacrylate copolymer, vinyl chloride-ethylene copolymer, and combinations thereof;
wherein said organic materials are selected from alginate, chitosan, collagen, cells, cell products such as growth factors, active agents such as antibiotics and cytostatics, lactose, cellulose, starch, sucrose, paraffin, hard fat, polyethylene glycol, polyethylene oxide, and combinations thereof;
wherein said solvents are selected from water, 1,1,1-trichloroethane, 1,4-dioxane, 1-butanol, 1-decanol, 1-octanol, 1-pentanol, 2-butanol, 2-ethyl-1-butanol, 2-ethylhexanol, propan-2-ol, 2-methyl-1-propanol, 2-methyl-2-propanol, 2-octanol, 3-methyl-1-butanol, 4-methyl-2-pentanol, acetone, acetonitrile, aniline, anisole, benzene, benzonitrile, benzyl alcohol, bromobenzene, quinoline, chlorobenzene, trichloromethane, cyclohexane, cyclohexanol, diacetone alcohol, dibutyl ether, diethylene glycol, diethyl ether, dimethylacetamide, dimethylformamide, dimethyl sulfoxide, glacial acetic acid, acetic anhydride, ethyl acetate, ethanol, ethylene dichloride, ethylene glycol, ethylene glycol dimethyl ether, formamide, hexanol, methanol, methylene chloride, methyl ethyl ketone, n-heptane, n-hexane, nitrobenzene, nitromethane, N-methyl-2-pyrrolidone, N-methylformamide, n-pentane, petroleum ether, piperidine, propanol, 4-methyl-1,3-dioxol-2-one, pyridine, carbon disulfide, sulfolane, tert-amyl alcohol, tert-butanol, tert-butyl methyl ether, tetrachloroethene, carbon tetrachloride, tetrahydrofuran, tetrahydrofurfuryl alcohol, toluene, trichloroethene, triethylamine, triethanolamine, triethyleneglycol, triethyleneglycol dimethyl ether, gamma-butyrolactone, and combinations thereof; wherein said dispersing agents are selected from L-glutamic-N,N-diacetic acid, diethylenetriamine, ethylenediaminetetraacetic acid, hydroxyethylethylenediaminetriacetic acid, nitrilotriacetic acid, sodium gluconate, gluconic acid, iminodisuccinate, polyaspartic acid, butanol, triethanolamine, paraffin, and combinations thereof; and/or
wherein said binders are selected from paraffin, cellulose, fish oil, acrylic ester copolymer, acrylic polymer, alkali phosphates, ammonium alginate, carboxymethyl cellulose, dextrins, epoxy, ethylene oxide polymer, ethylene vinyl acetate, ethyl silicate, gum arabic, hydroxyethylcellulose, methyl cellulose, sodium alginate, sodium aluminate, sodium silicate, nitrocellulose, polyacrylamide, polyacrylate, polyacrylate ester, polyethylene, polyethylene glycol, poly(methyl methacrylate), polystyrene, polyvinyl acetate, polyvinyl alcohol, polyvinyl chloride, starch, styrene acrylonitrile, polyvinyl butyral, urethane acrylate, hydroxy ketone, benzophenone, cellulose acetate, cellulose acetate butyrate, waxes such as wax ester, Fischer-Tropsch wax, beeswax, paraffin wax, petroleum wax, and polyethylene wax, and combinations thereof.

3. Use of a composition according to claim 1 or 2, wherein said composition further comprises at least one additive selected from liquifying agents, plasticizers, defoamers, wetting agents, thickeners, humectants, fillers, and combinations thereof;
wherein, optionally,
said liquifying agents are selected from humic acids, peptization aids, fish oil such as menhaden fish oil, aryl sulfonic acids such as benzene sulfonic acids, fatty acids such as glyceryl trioleate, alkali salts such as sodium salts, alkali silicates e.g. sodium silicate, alkali phosphates, alkali carbonates, alkali salts of tannic acids, alkali salts of humic acids, alkali salts of polycarboxylic acids, alkali salts of phosphonic acids, and combinations thereof,
said plasticizers are selected from gelatin, dextrin, gum arabic, paraffin, butyl benzyl phthalate, butyl stearate, dibutyl phthalate, dimethyl phthalate, ethylene acrylic acid, ethylene vinyl acetate, ethyltoluene sulfonamide, glycerine, methyl abietate, methyl ethyl ketone, octyl phthalate, polyalcylene glycol such as polyethylene glycol, triethylene glycol hexoate, polyethylene copolymer, polypropylene copolymer, triethylene glycol, tri-n-butyl phosphate, vinyl acetate copolymer, phthalic acid ester, fish oil, and combinations thereof,
said defoamers are selected from waxes,
said wetting agents are selected from alkyl polyether alcohol, arylphenyl glycol, fish oils, octylphenoxyethanol, oleic acids, polyoxyethylene acetate, polyethylene ester, polyethylene glycol, polyethylene oxide, polysorbate, polyethylene glycol ethyl ether, stearic acid, stearic acid-oleic acid monoamides, and combinations thereof,
said thickeners are selected from sodium monofluorophosphate, paper clay, polyurethane, acrylate polymers, starch, guar gum, xanthan gum, alginate, carrageenan, pectin, tragacanth, polyacrylic acid, polyvinylpyrrolidone, silicon dioxide, methylcellulose, ethylcellulose, hydroxypropylcellulose, hydroxypropylmethylcellulose, carboxymethylcellulose, and combinations thereof,
said humectants are selected from polyethylene glycol alkyl ether, and/or
said fillers are selected from lactose, cellulose, starch, sucrose, paraffin, hard fat, polyethylene glycol, polyethylene oxide, and combinations thereof;
wherein, preferably, the composition comprises a liquifying agent, a plasticizer, and/or a thickener;
wherein, more preferably, the composition comprises
a liquifying agent in an amount in a range of from 0.0001 wt.% to 10 wt.%, preferably in an amount in a range of from 0.001 wt.% to 2% wt.%, more preferably in an amount in a range of from 0.001 wt.% to 0.5 wt.% such as in an amount in a range of from 0.001 wt.% to 0.05 wt.%,
a plasticizer in an amount of < 95 wt.%, preferably in an amount in a range of from 10 wt.% to 65 wt.%, and/or
a thickener in an amount in a range from 0.001 wt.% to 10 wt.%, preferably in an amount in a range from 0.01% wt.% to 3wt.%;
wherein, optionally, the composition comprises a defoamer, a wetting agent, or a combination thereof in an amount < 95 wt.%, preferably in an amount in a range of from 0.0001 wt.% to 5 wt.%.

4. Use of a composition according to any one of the foregoing claims, wherein said first component is selected from metals, ceramic materials, glasses, and combinations thereof, and is present in said composition in an amount in a range of from 5 wt. % to 99.5 wt. %; or said first component is selected from plastics, organic materials, and combinations thereof, and is present in said composition in an amount in a range of from 5 wt. % to 100 wt. %; and/or
wherein said first component is selected from silicon carbide, aluminum, tungsten, poly(methyl methacrylate), talcum, stainless steel, and combinations thereof.

5. Use of a composition according to any one of the foregoing claims, wherein the composition has a density in a range of from 0.5 g/cm³ to 20 g/cm³; and/or wherein the composition has a viscosity of at least 3 dPa·s, preferably a viscosity in a range of from 5 to 30 dPa·s, as measured in accordance with standard DIN 53019.

6. Use of a composition according to any one of the foregoing claims, wherein the composition comprises particles;
wherein, preferably, said particles have a particle size in a range of from 1 nm to 25 µm, preferably of from 50 nm to 25 µm;
wherein, more preferably, said particles have a D₅₀ in a range of from 0.5 µm to 5 µm and a D₉₀ in a range of from 2.5 µm to 20 µm;
wherein, optionally, said particles have a D₁₀₀ in a range of from 25 µm to 35µm.

7. Use of a composition according to any one of the foregoing claims, wherein
said first component is a metal, preferably stainless steel, more preferably stainless steel particles;
wherein said second component is a dispersing agent, preferably selected from butanol, triethanolamine, and combinations thereof;
wherein said third component is polyvinyl butyral;
wherein, preferably, said composition further comprises a plasticizer selected from phthalic acid ester, polyethylene glycol, and a combination thereof;
wherein, optionally, said composition comprises
said first component, preferably stainless steel, in an amount in a range of from 40 wt.% to 65 wt.%, preferably in a range of from 50 wt.% to 56 wt.%, more preferably in a range of from 52 wt.% to 54 wt.%, even more preferably of about 53 wt.%,
said second component in an amount in a range of from 15 wt.% to 40 wt.%, preferably in a range of from 20 wt.% to 35 wt.%, more preferably in a range of from 25 wt.% to 30 wt.%, even more preferably of about 27.3 wt.%, for example butanol in an amount of about 26 wt.% and triethanolamine in an amount of about 1.3 wt.%,
said third component in an amount in a range of from 4 wt.% to 10 wt.%, preferably in a range of from 5 wt.% to 9 wt.%, more preferably in a range of from 6 wt.% to 8 wt.%, even more preferably of about 6.9 wt.%,
said plasticizer, if present, in an amount in a range of from 5 wt.% to 20 wt.%, preferably in a range of from 10 wt.% to 15 wt.%, more preferably in a range of from 12 wt.% to 13.5 wt.%, even more preferably of about 12.8 wt.%, for example phthalic acid ester in an amount of about 6 wt.% and polyethylene glycol in an amount of about 6.9 wt.%.

8. Use of a composition according to any one of claims 1-6, wherein
said first component is a ceramic material, preferably a silicon carbide ceramic, more preferably silicon carbide ceramic particles;
wherein said second component is water;
wherein said third component is dextrin;
wherein, preferably, said composition further comprises a plasticizer, preferably a fish oil;
wherein, optionally, said composition further comprises potassium hydroxide; wherein, optionally, said composition comprises
said first component in an amount in a range of from 40 wt.% to 80 wt.%, preferably in a range of from 50 wt.% to 70 wt.%, more preferably in a range of from 55 wt.% to 67 wt.%, even more preferably of about 58.3 wt.% or about 62.7 wt.%,
said second component in an amount in a range of from 25 wt.% to 40 wt.%, preferably in a range of from 28 wt.% to 36 wt.%, more preferably in a range of from 30 wt.% to 35 wt.%, even more preferably of about 31.1 wt.% or about 33.5 wt.%,
said third component in an amount in a range of from 0.01 wt.% to 3 wt.%, preferably in a range of from 0.1 wt.% to 1 wt.%, more preferably in a range of from 0.2 wt.% to 0.6 wt.%, even more preferably of about 0.4 wt.%,
said plasticizer, if present, in an amount in a range of from 1 wt.% to 15 wt.%, preferably in a range of from 3 wt.% to 10 wt.%, more preferably in a range of from 6 wt.% to 8 wt.%, even more preferably of about 7 wt.%,
said potassium hydroxide, if present, in an amount in a range of from 0.001 wt.% to 0.1 wt.%, preferably in a range of from 0.01 wt.% to 0.08 wt.%, more preferably in a range of from 0.02 wt.% to 0.06 wt.%, even more preferably of about 0.04 wt.%.

9. Use of a composition according to any one of claims 1-6, wherein
said first component is a ceramic material, preferably a silicon carbide ceramic, more preferably silicon carbide ceramic particles;
wherein said second component is an organic solvent, preferably ethanol, trichloroethene, or a combination thereof;
wherein said third component is polyvinyl butyral;
wherein, preferably, said composition further comprises a plasticizer selected from fish oil, polyethylene glycol, and a combination thereof;
wherein, optionally, said composition comprises
said first component in an amount in a range of from 20 wt.% to 60 wt.%, preferably in a range of from 30 wt.% to 50 wt.%, more preferably in a range of from 35 wt.% to 45 wt.%, even more preferably of about 39.5 wt.%,
said second component in an amount in a range of from 30 wt.% to 60 wt.%, preferably in a range of from 40 wt.% to 55 wt.%, more preferably in a range of from 45 wt.% to 50 wt.%, even more preferably of about 47.5 wt.%,
said third component in an amount in a range of from 0.01 wt.% to 3 wt.%, preferably in a range of from 0.1 wt.% to 2 wt.%, more preferably in a range of from 0.6 wt.% to 1 wt.%, even more preferably of about 0.8 wt.%,
said plasticizer, if present, in an amount in a range of from 5 wt.% to 20 wt.%, preferably in a range of from 10 wt.% to 15 wt.%, more preferably in a range of from 11 wt.% to 13 wt.%, even more preferably of about 12.2 wt.%, for example fish oil in an amount of about 0.2 wt.% and polyethylene glycol in an amount of about 12 wt.%.

10. Use of a composition according to any one of claims 1-6, wherein
said first component comprises a glass, silver, or a combination thereof, preferably comprises a glass and silver, more preferably a glass frit and silver;
wherein said second component is a dispersing agent, optionally is paraffin; wherein said third component is paraffin;
wherein, optionally, said composition comprises
said glass in an amount in a range of from 40 wt.% to 80 wt.%, preferably in a range of from 50 wt.% to 70 wt.%, more preferably in a range of from 60 wt.% to 65 wt.%, even more preferably of about 63.5 wt.%,
said silver in an amount in a range of from 5 wt.% to 25 wt.%, preferably in a range of from 10 wt.% to 20 wt.%, more preferably in a range of from 14 wt.% to 17 wt.%, even more preferably of about 15.9 wt.%,
said second component in an amount in a range of from 10 wt.% to 30 wt.%, preferably in a range of from 15 wt.% to 25 wt.%, more preferably in a range of from 18 wt.% to 21 wt.%, even more preferably of about 19.8 wt.%,
said third component in an amount in a range of from 0.1 wt.% to 1.5 wt.%, preferably in a range of from 0.5 wt.% to 1 wt.%, more preferably in a range of from 0.7 wt.% to 0.9 wt.%, even more preferably of about 0.8 wt.%.

11. Use of a composition according to any one of claims 1-6, wherein
said first component comprises urethane acrylate oligomer, talcum, tri-acrylate oligomer, or a combination thereof;
wherein said second component is a dispersing agent, preferably comprising acrylate monomers;
wherein said third component comprises urethane acrylate, hydroxy ketone, benzophenone, or a combination thereof;
wherein, preferably, said composition further comprises silicone-acrylate, polyethersiloxane copolymer, or a combination thereof;
wherein, optionally, said composition comprises
said urethane acrylate oligomer in an amount in a range of from 40 wt.% to 65 wt.%, preferably in a range of from 45 wt.% to 60 wt.%, more preferably in a range of from 52 wt.% to 55 wt.%, even more preferably of about 53.5 wt.%,
said talcum in an amount in a range of from 0.01 wt.% to 0.4 wt.%, preferably in a range of from 0.15 wt.% to 0.3 wt.%, more preferably in a range of from 0.2 wt.% to 0.25 wt.%, even more preferably of about 0.22 wt.%,
said tri-acrylate oligomer in an amount in a range of from 5 wt.% to 15 wt.%, preferably in a range of from 6 wt.% to 12 wt.%, more preferably in a range of from 8 wt.% to 10 wt.%, even more preferably of about 8.9 wt.%,
said acrylate monomers in an amount in a range of from 25 wt.% to 45 wt.%, preferably in a range of from 30 wt.% to 40 wt.%, more preferably in a range of from 33 wt.% to 38 wt.%, even more preferably of about 35.7 wt.%,
said urethane acrylate in an amount in a range of from 0.01 wt.% to 1 wt.%, preferably in a range of from 0.1 wt.% to 0.5 wt.%, more preferably in a range of from 0.2 wt.% to 0.4 wt.%, even more preferably of about 0.27 wt.%,
said hydroxy ketone in an amount in a range of from 0.1 wt.% to 2 wt.%, preferably in a range of from 0.5 wt.% to 1.5 wt.%, more preferably in a range of from 0.8 wt.% to 1 wt.%, even more preferably of about 0.89 wt.%,
said benzophenone in an amount in a range of from 0.01 wt.% to 2 wt.%, preferably in a range of from 0.1 wt.% to 1 wt.%, more preferably in a range of from 0.3 wt.% to 0.6 wt.%, even more preferably of about 0.45 wt.%,
said silicone-acrylate, if present, in an amount in a range of from 0.001 wt.% to 0.1 wt.%, preferably in a range of from 0.01 wt.% to 0.08 wt.%, more preferably in a range of from 0.02 wt.% to 0.06 wt.%, even more preferably of about 0.04 wt.%.

12. Use of a composition according to any one of claims 1-6, wherein
said first component comprises collagen such as collagen type I fibers, collagen hydrolysate, or a combination thereof;
wherein said second component comprises water;
wherein said third component comprises cellulose acetate;
wherein, preferably, said composition further comprises cells, a cell product such as a growth factor, an active agent, or a combination thereof;
wherein, optionally, said composition comprises
said collagen in an amount in a range of from 35 wt.% to 65 wt.%, preferably in a range of from 40 wt.% to 55 wt.%, more preferably in a range of from 45 wt.% to 50 wt.%, even more preferably of about 47.4 wt.%,
said collagen hydrolysate in an amount in a range of from 10 wt.% to 35 wt.%, preferably in a range of from 20 wt.% to 28 wt.%, more preferably in a range of from 22 wt.% to 25 wt.%, even more preferably of about 23.7 wt.%,
said water in an amount in a range of from 10 wt.% to 40 wt.%, preferably in a range of from 20 wt.% to 35 wt.%, more preferably in a range of from 27 wt.% to 30 wt.%, even more preferably of about 28.5 wt.%,
said cellulose acetate in an amount in a range of from 0.01 wt.% to 1 wt.%, preferably in a range of from 0.1 wt.% to 0.5 wt.%, more preferably in a range of from 0.2 wt.% to 0.4 wt.%, even more preferably of about 0.28 wt.%,
said growth factors, if present, in an amount in a range of from 0.001 wt.% to 0.1 wt.%, preferably in a range of from 0.01 wt.% to 0.08 wt.%, more preferably in a range of from 0.03 wt.% to 0.07 wt.%, even more preferably of about 0.05 wt.%,
said cells, if present, in an amount in a range of from 0.01 wt.% to 1 wt.%, preferably in a range of from 0.05 wt.% to 0.5 wt.%, more preferably in a range of from 0.07 wt.% to 0.15 wt.%, even more preferably of about 0.11 wt.%.

13. A composition for three-dimensional screen printing, preferably rotary screen printing, of a three-dimensional body, comprising
a first component selected from metals, ceramic materials, glasses, plastics, organic materials, and combinations thereof;
a second component selected from solvents and dispersing agents; and
a third component selected from binders;
wherein
a) said first component is a metal, preferably stainless steel, more preferably stainless steel particles;
wherein said second component is a dispersing agent, preferably selected from butanol, triethanolamine, and combinations thereof;
wherein said third component is polyvinyl butyral;
wherein, preferably, said composition further comprises a plasticizer selected from phthalic acid ester, polyethylene glycol, and a combination thereof;
wherein, optionally, said composition comprises
said first component, preferably stainless steel, in an amount in a range of from 40 wt.% to 65 wt.%, preferably in a range of from 50 wt.% to 56 wt.%, more preferably in a range of from 52 wt.% to 54 wt.%, even more preferably of about 53 wt.%,
said second component in an amount in a range of from 15 wt.% to 40 wt.%, preferably in a range of from 20 wt.% to 35 wt.%, more preferably in a range of from 25 wt.% to 30 wt.%, even more preferably of about 27.3 wt.%, for example butanol in an amount of about 26 wt.% and triethanolamine in an amount of about 1.3 wt.%,
said third component in an amount in a range of from 4 wt.% to 10 wt.%, preferably in a range of from 5 wt.% to 9 wt.%, more preferably in a range of from 6 wt.% to 8 wt.%, even more preferably of about 6.9 wt.%,
said plasticizer, if present, in an amount in a range of from 5 wt.% to 20 wt.%, preferably in a range of from 10 wt.% to 15 wt.%, more preferably in a range of from 12 wt.% to 13.5 wt.%, even more preferably of about 12.8 wt.%, for example phthalic acid ester in an amount of about 6 wt.% and polyethylene glycol in an amount of about 6.9 wt.%;
or wherein
b) said first component is a ceramic material, preferably a silicon carbide ceramic, more preferably silicon carbide ceramic particles;
wherein said second component is water;
wherein said third component is dextrin;
wherein, preferably, said composition further comprises a plasticizer, preferably a fish oil;
wherein, optionally, said composition further comprises potassium hydroxide;
wherein, optionally, said composition comprises
said first component in an amount in a range of from 40 wt.% to 80 wt.%, preferably in a range of from 50 wt.% to 70 wt.%, more preferably in a range of from 55 wt.% to 67 wt.%, even more preferably of about 58.3 wt.% or about 62.7 wt.%,
said second component in an amount in a range of from 25 wt.% to 40 wt.%, preferably in a range of from 28 wt.% to 36 wt.%, more preferably in a range of from 30 wt.% to 35 wt.%, even more preferably of about 31.1 wt.% or about 33.5 wt.%,
said third component in an amount in a range of from 0.01 wt.% to 3 wt.%, preferably in a range of from 0.1 wt.% to 1 wt.%, more preferably in a range of from 0.2 wt.% to 0.6 wt.%, even more preferably of about 0.4 wt.%,
said plasticizer, if present, in an amount in a range of from 1 wt.% to 15 wt.%, preferably in a range of from 3 wt.% to 10 wt.%, more preferably in a range of from 6 wt.% to 8 wt.%, even more preferably of about 7 wt.%,
said potassium hydroxide, if present, in an amount in a range of from 0.001 wt.% to 0.1 wt.%, preferably in a range of from 0.01 wt.% to 0.08 wt.%, more preferably in a range of from 0.02 wt.% to 0.06 wt.%, even more preferably of about 0.04 wt.%;
or wherein
c) said first component is a ceramic material, preferably a silicon carbide ceramic, more preferably silicon carbide ceramic particles;
wherein said second component is an organic solvent, preferably ethanol, trichloroethene, or a combination thereof;
wherein said third component is polyvinyl butyral;
wherein, preferably, said composition further comprises a plasticizer selected from fish oil, polyethylene glycol, and a combination thereof;
wherein, optionally, said composition comprises
said first component in an amount in a range of from 20 wt.% to 60 wt.%, preferably in a range of from 30 wt.% to 50 wt.%, more preferably in a range of from 35 wt.% to 45 wt.%, even more preferably of about 39.5 wt.%,
said second component in an amount in a range of from 30 wt.% to 60 wt.%, preferably in a range of from 40 wt.% to 55 wt.%, more preferably in a range of from 45 wt.% to 50 wt.%, even more preferably of about 47.5 wt.%,
said third component in an amount in a range of from 0.01 wt.% to 3 wt.%, preferably in a range of from 0.1 wt.% to 2 wt.%, more preferably in a range of from 0.6 wt.% to 1 wt.%, even more preferably of about 0.8 wt.%,
said plasticizer, if present, in an amount in a range of from 5 wt.% to 20 wt.%, preferably in a range of from 10 wt.% to 15 wt.%, more preferably in a range of from 11 wt.% to 13 wt.%, even more preferably of about 12.2 wt.%, for example fish oil in an amount of about 0.2 wt.% and polyethylene glycol in an amount of about 12 wt.%;
or wherein
d) said first component comprises a glass, silver, or a combination thereof, preferably comprises a glass and silver, more preferably a glass frit and silver;
wherein said second component is a dispersing agent, optionally is paraffin;
wherein said third component is paraffin;
wherein, optionally, said composition comprises
said glass in an amount in a range of from 40 wt.% to 80 wt.%, preferably in a range of from 50 wt.% to 70 wt.%, more preferably in a range of from 60 wt.% to 65 wt.%, even more preferably of about 63.5 wt.%,
said silver in an amount in a range of from 5 wt.% to 25 wt.%, preferably in a range of from 10 wt.% to 20 wt.%, more preferably in a range of from 14 wt.% to 17 wt.%, even more preferably of about 15.9 wt.%,
said second component in an amount in a range of from 10 wt.% to 30 wt.%, preferably in a range of from 15 wt.% to 25 wt.%, more preferably in a range of from 18 wt.% to 21 wt.%, even more preferably of about 19.8 wt.%,
said third component in an amount in a range of from 0.1 wt.% to 1.5 wt.%, preferably in a range of from 0.5 wt.% to 1 wt.%, more preferably in a range of from 0.7 wt.% to 0.9 wt.%, even more preferably of about 0.8 wt.%;
or wherein
e) said first component comprises urethane acrylate oligomer, talcum, tri-acrylate oligomer, or a combination thereof;
wherein said second component is a dispersing agent, preferably comprising acrylate monomers;
wherein said third component comprises urethane acrylate, hydroxy ketone, benzophenone, or a combination thereof;
wherein, preferably, said composition further comprises silicone-acrylate, polyethersiloxane copolymer, or a combination thereof;
wherein, optionally, said composition comprises
said urethane acrylate oligomer in an amount in a range of from 40 wt.% to 65 wt.%, preferably in a range of from 45 wt.% to 60 wt.%, more preferably in a range of from 52 wt.% to 55 wt.%, even more preferably of about 53.5 wt.%,
said talcum in an amount in a range of from 0.01 wt.% to 0.4 wt.%, preferably in a range of from 0.15 wt.% to 0.3 wt.%, more preferably in a range of from 0.2 wt.% to 0.25 wt.%, even more preferably of about 0.22 wt.%,
said tri-acrylate oligomer in an amount in a range of from 5 wt.% to 15 wt.%, preferably in a range of from 6 wt.% to 12 wt.%, more preferably in a range of from 8 wt.% to 10 wt.%, even more preferably of about 8.9 wt.%,
said acrylate monomers in an amount in a range of from 25 wt.% to 45 wt.%, preferably in a range of from 30 wt.% to 40 wt.%, more preferably in a range of from 33 wt.% to 38 wt.%, even more preferably of about 35.7 wt.%,
said urethane acrylate in an amount in a range of from 0.01 wt.% to 1 wt.%, preferably in a range of from 0.1 wt.% to 0.5 wt.%, more preferably in a range of from 0.2 wt.% to 0.4 wt.%, even more preferably of about 0.27 wt.%,
said hydroxy ketone in an amount in a range of from 0.1 wt.% to 2 wt.%, preferably in a range of from 0.5 wt.% to 1.5 wt.%, more preferably in a range of from 0.8 wt.% to 1 wt.%, even more preferably of about 0.89 wt.%,
said benzophenone in an amount in a range of from 0.01 wt.% to 2 wt.%, preferably in a range of from 0.1 wt.% to 1 wt.%, more preferably in a range of from 0.3 wt.% to 0.6 wt.%, even more preferably of about 0.45 wt.%,
said silicone-acrylate, if present, in an amount in a range of from 0.001 wt.% to 0.1 wt.%, preferably in a range of from 0.01 wt.% to 0.08 wt.%, more preferably in a range of from 0.02 wt.% to 0.06 wt.%, even more preferably of about 0.04 wt.%;
or wherein
f) said first component comprises collagen such as collagen type I fibers, collagen hydrolysate, or a combination thereof;
wherein said second component comprises water;
wherein said third component comprises cellulose acetate;
wherein, preferably, said composition further comprises cells, a cell product such as a growth factor, an active agent, or a combination thereof;
wherein, optionally, said composition comprises
said collagen in an amount in a range of from 35 wt.% to 65 wt.%, preferably in a range of from 40 wt.% to 55 wt.%, more preferably in a range of from 45 wt.% to 50 wt.%, even more preferably of about 47.4 wt.%,
said collagen hydrolysate in an amount in a range of from 10 wt.% to 35 wt.%, preferably in a range of from 20 wt.% to 28 wt.%, more preferably in a range of from 22 wt.% to 25 wt.%, even more preferably of about 23.7 wt.%,
said water in an amount in a range of from 10 wt.% to 40 wt.%, preferably in a range of from 20 wt.% to 35 wt.%, more preferably in a range of from 27 wt.% to 30 wt.%, even more preferably of about 28.5 wt.%,
said cellulose acetate in an amount in a range of from 0.01 wt.% to 1 wt.%, preferably in a range of from 0.1 wt.% to 0.5 wt.%, more preferably in a range of from 0.2 wt.% to 0.4 wt.%, even more preferably of about 0.28 wt.%,
said growth factors, if present, in an amount in a range of from 0.001 wt.% to 0.1 wt.%, preferably in a range of from 0.01 wt.% to 0.08 wt.%, more preferably in a range of from 0.03 wt.% to 0.07 wt.%, even more preferably of about 0.05 wt.%,
said cells, if present, in an amount in a range of from 0.01 wt.% to 1 wt.%, preferably in a range of from 0.05 wt.% to 0.5 wt.%, more preferably in a range of from 0.07 wt.% to 0.15 wt.%, even more preferably of about 0.11 wt.%.

14. A method of three-dimensional screen printing a three-dimensional body, comprising
i) applying a first layer of a composition to a support;
ii) preferably, applying one or more, preferably a plurality of further layers of said composition to said first layer;
wherein, optionally, said method comprises a step of contacting said first layer and optionally, if present, said one or more, preferably a plurality of further layers, with any of light, laser, microwaves, x-rays, heat, cold, humidity, air, vacuum, a crosslinking agent, or a combination thereof; wherein, preferably, said method comprises a step of drying said first layer and optionally said one or more, preferably a plurality of further layers;
wherein said composition is a composition according to claim 13 and/or is a composition comprising
a first component selected from metals, ceramic materials, glasses, plastics, organic materials, and combinations thereof; wherein, preferably, said first component is present in said composition in an amount of at least 5 wt. %;
a second component selected from solvents and dispersing agents; wherein, preferably, said second component is present in said composition in an amount in a range of from 0.5 wt. % to 95 wt. %, preferably in a range of from 20 wt. % to 65 wt. %;
a third component selected from binders; wherein, preferably, said third component is present in said composition in an amount in a range of from 0.0001 wt. % to 95 wt. %, preferably in a range of from 0.0001 wt. % to 10 wt. %, more preferably in a range of from 0.001 wt. % to 5 wt. %, even more preferably in a range of from 0.1 wt. % to 1.5 wt. %.

15. The method according to claim 14, wherein said composition comprises at least one additive selected from liquifying agents, plasticizers, defoamers, wetting agents, thickeners, humectants, fillers, and combinations thereof;
wherein, optionally,
said liquifying agents are selected from humic acids, peptization aids, fish oil such as menhaden fish oil, aryl sulfonic acids such as benzene sulfonic acids, fatty acids such as glyceryl trioleate, alkali salts such as sodium salts, alkali silicates e.g. sodium silicate, alkali phosphates, alkali carbonates, alkali salts of tannic acids, alkali salts of humic acids, alkali salts of polycarboxylic acids, alkali salts of phosphonic acids, and combinations thereof,
said plasticizers are selected from gelatin, dextrin, gum arabic, paraffin, butyl benzyl phthalate, butyl stearate, dibutyl phthalate, dimethyl phthalate, ethylene acrylic acid, ethylene vinyl acetate, ethyltoluene sulfonamide, glycerine, methyl abietate, methyl ethyl ketone, octyl phthalate, polyalcylene glycol such as polyethylene glycol, triethylene glycol hexoate, polyethylene copolymer, polypropylene copolymer, triethylene glycol, tri-n-butyl phosphate, vinyl acetate copolymer, phthalic acid ester, fish oil, and combinations thereof,
said defoamers are selected from waxes,
said wetting agents are selected from alkyl polyether alcohol, arylphenyl glycol, fish oils, octylphenoxyethanol, oleic acids, polyoxyethylene acetate, polyethylene ester, polyethylene glycol ethyl ether, stearic acid, stearic acid-oleic acid monoamides, and combinations thereof,
said thickeners are selected from sodium monofluorophosphate, paper clay, polyurethane, acrylate polymers, starch, guar gum, xanthan gum, alginate, carrageenan, pectin, tragacanth, polyacrylic acid, polyvinylpyrrolidone, silicon dioxide, methylcellulose, ethylcellulose, hydroxypropylcellulose, hydroxypropylmethylcellulose, carboxymethylcellulose, and combinations thereof,
said humectants are selected from polyethylene glycol alkyl ether, and/or
said fillers are selected from lactose, cellulose, starch, sucrose, paraffin, hard fat, polyethylene glycol, polyethylene oxide, and combinations thereof;
wherein, preferably, the composition comprises a liquifying agent, a plasticizer, and/or a thickener;
wherein, more preferably, the composition comprises
a liquifying agent in an amount in a range of from 0.0001 wt.% to 10 wt.%, preferably in an amount in a range of from 0.001 wt.% to 2% wt.%, more preferably in an amount in a range of from 0.001 wt.% to 0.5 wt.% such as in an amount in a range of from 0.001 wt.% to 0.05 wt.%,
a plasticizer in an amount of < 95 wt.%, preferably in an amount in a range of from 10 wt.% to 65 wt.%, and/or
a thickener in an amount in a range from 0.001 wt.% to 10 wt.%, preferably in an amount in a range from 0.01% wt.% to 3wt.%;
wherein, optionally, the composition comprises a defoamer, a wetting agent, or a combination thereof in an amount < 95 wt.%, preferably in an amount in a range of from 0.0001 wt.% to 5 wt.%.
